# EUROPEAN PATENT SPECIFICATION

(11) **EP 4 575 809 B1**
(45) Date of publication and mention of the grant of the patent: **27.05.2026**
(21) Application number: 23220116.0
(22) Date of filing: 22.12.2023
(51) Int. Cl.: G06F 12/0862

(54) **PREFETCHING OF MEMORY OBJECTS IN RECONFIGURABLE MEMORY SUBSYSTEMS FOR OBJECT-BASED COMPUTE NODES**
VORAUSLADUNG VON SPEICHEROBJEKTEN IN REKONFIGURIERBAREN SPEICHERSUBSYSTEMEN FÜR OBJEKTBASIERTE RECHENKNOTEN
PRÉEXTRACTION D'OBJETS DE MÉMOIRE DANS DES SOUS-SYSTÈMES DE MÉMOIRE RECONFIGURABLES POUR N UDS DE CALCUL BASÉS SUR DES OBJETS

(43) Date of publication of application: 25.06.2025
(73) Proprietor: Imec VZW, 3001 Leuven (BE)
(72) Inventor: NACKAERTS, Axel, 3053 Haasrode (BE)
(74) Representative: Winger

(56) References cited:
- US-A1- 2017 147 218

## Description

### Field of the invention

The present invention relates to the field of prefetching in object-based distributed computer memory architectures and specifically to multi-level prefetching in reconfigurable memory subsystems of compute nodes for high performance computing (HPC).

### Background of the invention

Conventional computer memory architectures are often implemented as hierarchical memory structures of multiple levels of cache memory and computer main memory. Preloading data into cache memory moves the data closer to the compute core, whereby a latency due to memory access from main memory are reduced. Predictive prefetching is frequently used in combination with cache-based computer memory hierarchies to anticipate the compute core's future requests to access main memory as accurately as possible and fill the caches in accordance with the predicted requests. When the compute core really needs the data, it is readily available in the cache memory and can be accessed much faster than in main memory. This improves the efficiency of memory requests. However, the improvement is limited by the accuracy of the prediction algorithm, which typically exploits data locality in main memory and therefore relies on the memory address information of the required input data. Inaccurate predictions cause cache misses and result in suboptimal prefetching and cache utilization. Predictive prefetching usually includes code analysis, at compile time or during execution, and the monitoring and recognition of data access patterns during execution.

In the context of cluster computers with distributed global main memory, caching memory address information locally at the compute node level often requires large memory capacities for the caches and complex cache synchronization protocols need to be put into place to ensure the coherency between caches of different compute nodes. This has the disadvantage that a large communication overhead reduces the efficiency of the caches and balancing the speed and capacity requirements of the caches is not always feasible.

US 2017147218 A1 deals with prefetching object segments in a node of a multi-node multiprocessing system.

There is a need for efficient and accurate prefetching solutions for distributed computer memory architectures.

### Summary of the invention

It is an object of embodiments of the present invention to prefetch data efficiently and more accurately from a distributed computer memory.

The above objective is accomplished by a device and method according to the present invention.

In one aspect, the present invention relates to an object-based compute node for a multi-node multiprocessing computer. The compute node comprises at least one compute core for executing tasks requiring memory objects as inputs, a runtime management unit for scheduling the tasks for execution on the at least one compute core, a memory subsystem comprising at least one level of intermediary memory object storage, and an object management unit interposed between the at least one compute core and the memory subsystem. Each memory object is assigned a unique object identifier, OID, and composed of a plurality of fragments that are accessible on a distributed store. Storage locations within the distributed store are referenced by physical addresses. The at least one compute core is configured to access the fragments of each memory object through offsets in a contiguous logical address space associated with the memory object, and the at least one compute core is operatively coupled through the memory subsystem to the distributed store. The distributed store is acting as the main memory for the compute node. A first level of intermediary memory object storage of the memory subsystem comprises a local store for storing memory object fragments accessed on the compute node and a local storage controller. The object management unit is configured to map logical addresses of memory object fragments to unique physical addresses of the distributed store, by calculating the physical address for each memory object fragment from a combination of the corresponding object identifier, OID, and fragment offset within the logical address space associated with the memory object. The runtime management unit is configured to notify the memory subsystem of the memory object identifier, OID, of memory objects that are inputs to a scheduled task; this notification process defining notified memory objects. Moreover, each memory object further comprises a metadata portion as one of at least two different partitions of the logical address space associated with the memory object. The metadata portion specifies an object type that allows the interpretation of content present in the remaining partitions of the memory object. Furthermore, the local storage controller of the first level of intermediary memory object storage is configured to access the metadata portion and detecting the object type included in the metadata portion of each notified memory object. The local storage controller of the first level of intermediary memory object storage is further configured to command prefetching of a number of fragments of the notified memory object, or another memory object that is referred to in the metadata portion of the notified memory object, from another level of intermediary memory object storage of the memory subsystem or the distributed store. The number of fragments and the offset of each one of said number of fragments is dependent on the object type.

According to some embodiments of the invention, the metadata portion of memory objects belonging to a data view type includes an object identifier, OID, as reference to a further memory object and parameters defining a view of the further memory object. The parameters cause the local storage controller of the first level of intermediary memory object storage to execute a subroutine that produces the offset of each one of the number of fragments of the further memory object as outputs. The parameters preferably include the object type of the further memory object. Otherwise, the local storage controller of the first level of intermediary memory object storage may be configured to access the metadata portion of the further memory object in order to retrieve the object type of the further memory object.

According to some embodiments of the invention, the local storage controller of the first level of intermediary memory object storage may be configured to execute a subroutine that accepts an object identifier, OID, as reference to a further memory object and parameters defining a view of the further memory object as inputs, and produces the offset of each one of the number of fragments of the further memory object as outputs. The metadata portion of memory objects belonging to a data view type includes the object identifier, OID, as reference to the further memory object and the parameters defining the view of the further memory object. The parameters preferably include the object type of the further memory object. Otherwise, the local storage controller of the first level of intermediary memory object storage may be configured to access the metadata portion of the further memory object in order to retrieve the object type of the further memory object.

According to some embodiments of the invention, the runtime management unit is configured to notify the memory subsystem of the memory object identifier, OID, in conjunction with a target fragment in the logical address space of the notified memory object. The local storage controller of the first level of intermediary memory object storage of the memory subsystem is further configured to command prefetching of the target fragment from the distributed store.

According to some embodiments of the invention, the compute node further comprises an object cache which is interposed between the at least one compute core and the object management unit, and an object allocation table. The object cache is configured for serving memory access requests issued by the at least one compute core. The at least one compute core is operatively coupled through the object cache and the memory subsystem to the distributed store. Each memory access request from the at least one compute core includes the offset and a virtual tag representative of the object identifier for a requested memory object fragment. The object allocation table is configured for storing the object identifiers, OIDs, of memory objects to be accessed by the at least one compute core alongside with the corresponding virtual tags. The object cache comprises a plurality of cache lines, and each cache line comprises a data portion for retaining copies of the memory object fragments required by the at least one compute core and a tag portion for retaining the virtual tag assigned to the memory object of which fragments are retained in the data portion. Moreover, a cache controller of the object cache is configured to compare the virtual tag included in the memory access request from the at least one compute core to the virtual tags stored in the tag portions of the cache lines. The cache controller is further configured to access one of the memory object fragments retained in one of the cache lines, based on the offset included in the memory access request from the at least one compute core, provided that the virtual tag for this cache line matches the virtual tag included in the memory access request from the at least one compute core.

According to some embodiments of the invention, the runtime management unit is further configured to identify memory objects that are inputs to a task scheduled for execution, assign virtual tags to the memory objects identified as task inputs, and allocate entries for the virtual tags in the object allocation table.

According to some embodiments of the invention, the cache controller of the object cache is further configured to replace the virtual tag included in the memory access request by the corresponding object identifier, OID, and redirect the memory access request from the at least one compute core to the memory object management unit if none of the virtual tags stored in the tag portions of the cache lines matches the virtual tag included in the memory access request from the at least one compute core.

According to some embodiments of the invention, the cache controller of the object cache is further configured to allocate a cache line of the plurality of cache lines to a copy of memory object fragments to be retained but not yet present in the object cache, and store the virtual tag included in the memory access request from the at least one compute core in the tag portion of the allocated cache line.

According to some embodiments of the invention, the cache controller of the object cache is further configured to assign a cache line of the plurality of cache lines to a specific memory object, by marking the cache line with the virtual tag that has been assigned to the specific memory object.

According to some embodiments of the invention, the compute node further comprises an address calculation unit which is associated with the at least one compute core. The address calculation unit is configured to calculate the fragment offsets in the logical address spaces of the memory objects to be processed by the at least one compute core, i.e. the memory objects that are inputs to scheduled tasks that are awaiting clearance for execution on the at least one compute core. The address calculation unit is further configured to issue memory access requests on behalf of the at least one compute core directly to the object cache.

In another aspect, the present invention relates to an object-based compute node for a multi-node multiprocessing computer. The compute node comprises at least one compute core for executing tasks requiring memory objects as inputs, a memory subsystem comprising at least one level of intermediary memory object storage, and an object management unit interposed between the at least one compute core and the memory subsystem. Each memory object is assigned a unique object identifier, OID, and composed of a plurality of fragments that are accessible on a distributed store. Storage locations within the distributed store are referenced by physical addresses. The at least one compute core is configured to access the fragments of each memory object through offsets in a contiguous logical address space associated with the memory object, and the at least one compute core is operatively coupled through the memory subsystem to the distributed store. The distributed store is acting as the main memory for the compute node. A first level of intermediary memory object storage of the memory subsystem comprises a local store for storing memory object fragments accessed on the compute node and a local storage controller. The object management unit is configured to map logical addresses of memory object fragments to unique physical addresses of the distributed store, by calculating the physical address for each memory object fragment from a combination of the corresponding object identifier 'OID' and fragment offset within the logical address space associated with the memory object. The object management unit is further configured to include the calculated physical address for a combination of object identifier and fragment offset into each memory request regarding this combination of object identifier and fragment offset. Moreover, the first level of intermediary memory object storage of the memory subsystem further comprises an allocation table having a plurality of row entries. Each row entry is configured for storing a combination of object identifier 'OID' and fragment offset, alongside with a storage pointer to a location in the local store and a cache pointer to a location in the local cache memory. Furthermore, the local storage controller is further configured to select a row of the allocation table, based on the physical address embedded in a memory request forwarded by the object management unit. The local storage controller is further configured to verify the object identifier and fragment offset embedded in the memory access request against the object identifier and fragment offset stored in the row entries of the selected allocation table row, and select a matching row entry. The local storage controller is further configured to verify the validity of the cache pointer stored in the selected row entry and, contingent on an outcome of a verification of the validity of the cache pointer, dispatch at least one auxiliary memory access request to the local cache memory, the local store, or both, thus serving the memory access request. The at least one auxiliary memory access request includes the locations indicated by the pointers stored in the selected allocation table entry.

According to some embodiments of the invention, the first level of intermediary memory object storage of the memory subsystem comprises a first, a second and a third memory device, the allocation table being stored on the first memory device. The first memory device has a higher bandwidth compared to the second memory device. A portion of the first memory device is selectively operable as the local cache memory, the second memory device is selectively operable as the local cache memory or as a part of the local store, and the third memory device is operable as a part of the local store. The local storage controller is further configured to select either the portion of the first memory device or the second memory device as a memory resource for the local cache memory, and map the cache pointers in the allocation table to an address space associated with the memory device selected as the memory resource for the local cache memory. The local storage controller is further configured to select either the second memory device or the third memory device as a memory resource for the local store, and map the storage pointers in the allocation table to an address space associated with the memory device selected as the memory resource for the local store, provided that the second memory device is deselected as the memory resource for the local cache memory.

According to some embodiments of the invention, the local storage controller is further configured to generate either an error message or a new row entry into the allocation table if no row entry of the selected allocation table row matches the object identifier and fragment offset embedded in the memory access request.

According to some embodiments of the invention, the local storage controller is further configured to clear each row entry of the allocation table that matches either the object identifier or both the object identifier and fragment offset embedded in a deallocation request, and erase the memory object fragments kept in the locations of the local store as indicated by the storage pointers of the row entries of the allocation table cleared by the deallocation request.

According to some embodiments of the invention, the object management unit and/or the local storage controller of the first level of intermediary memory object storage of the compute node memory subsystem is further configured to predict future accesses to memory object fragments based on past history of accesses to memory object fragments.

According to some embodiments of the invention, the compute node memory subsystem comprises multiple levels of intermediary memory object storage, and each level of intermediary memory object storage comprises a local store for storing memory object fragments accessed on the compute node and a local storage controller. The local stores of levels of intermediary memory object storage closer to the at least one compute core are faster but of lower memory capacity than the local stores of more remote levels of intermediary memory object storage. The first level of intermediary memory object storage acts as a lower-level cache with respect to a second level and any deeper levels of intermediary memory object storage.

The present invention also relates to a cluster computer that comprises a plurality of compute nodes according to embodiments of any one of the previous aspects, and the distributed store as the main memory that is shared by the plurality of compute nodes. The compute nodes are operatively interconnected through a computer network, e.g. a communication network. The distributed store may be composed of a plurality of distributed store units, which may be separate storage nodes coupled to compute nodes through the computer network, or may be collocated with the compute nodes.

In a further aspect, the present invention relates to an object-based prefetching method for a memory hierarchy that comprises the compute node in accordance with embodiments of any one of the previous aspects, and the distributed store acting as the main memory with regard to the compute node. The method comprises the steps of:
scheduling tasks for execution on at least one compute core of the compute node, the tasks requiring memory objects as inputs, each memory object being composed of a plurality of fragments accessible on the distributed store, wherein storage locations within the distributed store being referenced by physical addresses;
assigning a unique object identifier (OID) to each memory object;
including an object type in a metadata portion of each memory object, the metadata portion being one of at least two different partitions of the logical address space associated with the memory object and the object type allowing content present in the remaining partitions to be interpreted;
referencing the fragments of each memory object through offsets in a contiguous logical address space associated with the memory object upon execution of scheduled tasks on the at least one compute core of the compute node;
notifying a first level of intermediary memory object storage in the memory subsystem of the memory object identifiers (OID) of memory objects that are inputs to scheduled tasks;
accessing the metadata portion and detecting the object type in the metadata portion of the memory object notified to the first level of intermediary memory object storage in the memory subsystem; and
prefetching to the first level of intermediary memory object storage a number of fragments of the memory object notified to the first level of intermediary memory object storage in the memory subsystem, or another memory object referred to in the metadata portion of the notified memory object, from the distributed store or a deeper level of intermediary memory object storage in the memory subsystem, wherein the number of fragments and the offset of each one of said number of fragments is dependent on the detected object type;
wherein said prefetching comprises mapping logical addresses of memory object fragments to be prefetched to unique physical addresses, by calculating the physical address for each memory object fragment to be prefetched from a combination of the corresponding object identifier (OID) and fragment offset within the logical address space associated with the memory object.

According to some embodiments of the invention, the method further comprises:
including an object identifier as reference to a further memory object and parameters defining a view of the further memory object in the metadata portion of memory objects belonging to a data view type;
extracting the object identifier of the further memory object and the parameters defining the view of the further memory object from the metadata portion of the memory object notified to the first level of intermediary memory object storage in the memory subsystem;
executing a subroutine on the local storage controller of the first level of intermediary memory object storage that accepts the parameters defining the view of the further memory object as inputs and produces the offset of each one of said number of fragments of said other memory object as outputs. The parameters preferably include the object type of the further memory object. Otherwise, the method may comprise accessing the metadata portion of the further memory object to retrieve the object type of the further memory object.

It is an advantage of embodiments of the invention that the local memory subsystem of a compute node can determine in beforehand which memory object parts will be accessed by the compute cores of the compute node. This enables early data movement, increases the object cache hit rate, and reduces overall memory access latency.

It is an advantage of embodiments of the invention that view definitions can be embedded in the metadata chunk(s) of memory objects, which can be accessed by the memory subsystem controllers of the local memory subsystem of the compute node and causes the memory subsystem control to execute a program with parameters of the view definition as inputs and memory object shard offsets as outputs. This enables memory subsystems to anticipate future memory requests without the need for code execution on the compute cores.

It is an advantage of embodiments of the invention that the local memory subsystem of the compute node can hold copies of memory objects or object parts that will be accessed by the computer cores of the compute node. This reduces the frequency of compute node-external memory accesses to the high-latency distributed store.

It is an advantage of embodiments of the invention that the addressing scheme for object caches adjacent to compute cores of the compute node uses fragment offsets in the logical address space of memory objects. This simplifies prefetching at the object cache level and no operating system or memory fragmentation problems slow down the object cache performance.

It is an advantage of embodiments of the invention that the memory subsystem of a compute node can be dynamically reconfigured to meet changing demands in bandwidth and storage capacity that improve the efficiency of prefetching of memory objects into the local memory subsystem.

Particular and preferred aspects of the invention are set out in the accompanying independent and dependent claims. Features from the dependent claims may be combined with features of the independent claims and with features of other dependent claims as appropriate and not merely as explicitly set out in the claims.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, in which:
FIG. 1 illustrates the representation of a memory object from the perspective of the at least one compute core of a compute node in accordance with embodiments of the invention.
FIG. 2 illustrates how the memory object of FIG. 1 is stored in multiple locations of a distributed store to which a compute node in accordance with embodiments of the invention is coupled.
FIG. 3 explains how the memory object management unit achieves a change of representation of the memory objects, by calculating the physical memory addresses of memory object fragments based on the memory object's identifier, OID, and the fragment offsets in the logical address space associated with the memory object.
FIG. 4 is a more detailed block diagram of a compute node in accordance with an embodiment of the invention.
FIG. 5 explains the interactions between elements of hierarchical computer memory architecture which comprises a local memory subsystem for intermediary memory object storage at the compute node level and the distributed store as external main memory.
FIG. 6 explains the task handling by the compute core of a compute node in accordance with an embodiment of the invention, as well as its interaction with the object cache.
FIG. 7 is a block diagram that shows details of a local memory subsystem that can be used for local object storage in compute nodes in accordance with embodiments of the invention.
FIG. 8 is a block diagram that shows details of a local memory subsystem that can be used in storage nodes of a distributed store of a cluster computer in accordance with embodiments of the invention.
FIG. 9 and FIG. 10 illustrate two possible operation modes of a reconfigurable level of intermediary memory object storage in a compute node-local memory subsystem, in accordance with embodiments of the invention.
FIG. 11 illustrate three possible ways to utilize a node-local memory subsystem, in accordance with embodiments of the invention.

The drawings are only schematic and are non-limiting. Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings, but is only limited by the claims.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art.

It should be noted that the use of particular terminology when describing certain features or aspects of the invention should not be taken to imply that the terminology is being re-defined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

### DEFINITIONS

In the context of the present invention, a compute node is a scalable unit or building block for bigger compute systems like supercomputers or cluster computers. Compute nodes are replicated, typically a thousandfold or more, and assembled into a supercomputer. A compute node contains at least one compute core and additional components like object cache memory, node-local storage memory, object storage firewall, network interface, etc.

Hereinunder, the terms disaggregated storage (memory, store) and distributed storage (memory, store) are sometimes used interchangeably. Compared to node-local storage, which may be used to store prefetched copies of memory object fragments on the compute node and thus physically close to the compute cores, the distributed storage acts as a global main memory and is accessible to and accessed by many different compute nodes of a cluster computer. From the perspective of each compute node, the distributed storage is acting as the working memory for that compute node. A data communication network generally separates the compute node from the distributed storage. The distributed storage is used as non-persistent primary memory for the different compute nodes composing a cluster computer and short-term storage of memory objects on the distributed store for the purpose of calculations and program execution is different from the long-term storage of data structures in file systems related to secondary memory.

A compute core, in the context of the present invention, refers to a functional unit that is central to the compute node. The compute core is the node resource that is effectively executing program code; it therefor accepts instruction code and data to operate on. Both instruction code and data for execution by the core are core inputs that are stored as parts of memory objects on the distributed store as global main memory. Tasks that are scheduled for execution on one of the compute cores of the compute node are memory objects of a specific type and like any other memory object type, tasks can be temporarily dumped on the distributed store and later be retrieved from the distributed store, e.g. for the purpose of transferring the task for execution to the compute core of another compute node than is different from the task's creator node. Compute tasks performed by the core include the computational processes of arithmetic calculations on data stored in memory objects as well as address calculations. In embodiments of the invention, core inputs as well as tasks are requested, referenced and accessed through their corresponding memory objects, but are stored in many different locations of the distributed store, i.e. are distributed across and stored in non-contiguous regions of the global main memory.

Memory objects, in the context of the present invention, refer to a format for storing and organizing information in a disaggregated computer memory, e.g. the distributed store of a cluster computer. Here, information relates to data in the broadest sense and includes, among others, compute core inputs (instructions/code, data/operands), metadata associated with the information that is stored in memory objects, tasks, higher-level instructions like subroutines and functions, or combinations thereof. Memory objects are thus a container for organizing and storing content-related information. Information is typically stored in a self-contained way in memory objects. That is, one part of the memory object is dedicated to the structured storage of content (e.g., code, data, data or code references), whereas another part of the memory object is keeping a metadata structure as a description of the stored content (e.g., size of the memory object, content type, ownership data, access rights, timestamp information, object identification data).

Each memory object is also an ordered collection of non-contiguously allocated portions of computer main memory, designated as shards. A number of shards thus belong to and constitute together the memory object and, vice-versa, each memory object is subdivided into a plurality of shards as basic units for memory location within the distributed store. Each shard of each memory object is stored at a unique location in physical main memory, preferably a disaggregated memory system, which is indicated by a physical memory address in a physical address space. That is, from the main memory perspective, the physical addresses of the fragments a memory object is composed of are scattered across the physical address space associated with the computer main memory, e.g. a distributed main memory. Moreover, each shard of a memory object comprises a sequence of fragments as smaller subunits. It is thus also true that each memory object consists of a plurality of fragments. Fragments of memory object are defined as the basic unit of information that the compute cores of the compute node grasp in response to memory access commands (e.g. read and write commands). The size of memory object fragments is at least equal to the word size of the compute cores in the compute node, but generally are larger than the compute core's word size, e.g. is a multiple of the word size. However, compute cores use an alternative addressing scheme (i.e. compute core representation of the memory object) when requesting access to memory object fragments. From the compute core perspective, each memory object appears as a single contiguous block of memory that is subdivided into fragments. A logical address space is associated with the memory object as abstracted memory resource, in which the fragment are linearly referenceable through an offset. In consequence, the memory addresses of fragments have to translated between the logical address space of the memory object and the corresponding physical address space of the main memory, e.g. the distributed store, every time an exchange of memory object information is taking place between the compute node core(s) and computer main memory, e.g., during a memory access operation such as load/store operations. This underlying translation of fragments' memory addresses is performed by an memory object management unit and is completely hidden from the compute cores. Although bearing some resemblance with virtual memory architectures, the logic address spaces for portions of computer memory are implemented on a per-object basis instead of a per-process basis and compared to segmented or paged virtual memory resources, memory object fragments are not continuously referenceable in main memory but optimized for uniform distribution across the physical address space.

Memory objects further have an object identifier (OID) assigned to them, so that one can distinguish between the different coexisting memory objects. Moreover, the fragments of memory objects may be grouped into larger context-related structures such as chunks or nested chunks, e.g. separate chunks for metadata, code and data. Chunks of memory objects may be logical partitions of the logical address space that is associated with the compute core representation of each memory object.

A shard is defined as a predetermined number of memory object fragments that succeed each other in the logical address space associated with that memory object. Expressed in other words, a shard is a logical sequence of memory object fragments (contiguous region of the memory object's logical address space) of a predetermined length that is usually stored at the same physical location in the distributed store acting as the computer main memory (main memory for the compute node and the cluster computer containing the compute node). Typically, shards of memory objects rather than individual fragments are accessed (e.g. read or written) on the distributed store.

A chunk of a memory object is defined as a logical partition of the logical address space associated with the memory object. The chunk of a memory object typically counts many different shards and hence even more fragments.

In the context of the present disclosure, the terms "task manager/task management unit" and "runtime manager/runtime management unit" are used interchangeably.

Memory management of most modern computer processors is based on virtual memory, in which the operating system assigns a virtual address space to a program loaded for execution, i.e. a process. Through the implementation of virtualization, the program perceives memory as a contiguous directly addressable space (flat or linear memory). Virtual address spaces can be assigned to each running process independently. These computer processers exclusively use virtual memory addresses to reference and access information - bytewise - that is located in the virtual memory and therefore rely on a memory management unit (MMU) that translates the virtual memory addresses into corresponding physical memory address (references to locations in main memory, e.g. RAM, or even in secondary storage, e.g. paged out to hard drive). Virtual memory address calculations are routinely performed by the computer processors, either within dedicated address calculation units or within one of the processor's execution units itself. Moreover, the relatively slow access to main or primary memory is usually alleviated by the use of hierarchical multi-level cache memory, which are intermediate memory devices situated between the processor and main memory to reduce read latencies and CPU stalls.

In contrast to the memory management techniques and related memory management units used by conventional computer processors, processing units of embodiments of the present invention are configured to reference and access information, i.e. memory contents, as fragments of memory objects. Much like the address spaces in virtual memory implementations, the memory objects represent contiguous blocks of memory to which tasks or threads executed on a compute core of the compute node have direct access, provided the granted access rights allow to do so. The contiguous block of memory associated with each memory object is subdivided into a plurality of linearly addressable fragments, thus forming a logical address space for information retrieval by the compute core executing the tasks. Logical memory addresses of fragments accommodated in the memory object do have a physical counterpart; the logical memory addresses are mapped onto corresponding physical addresses that reference locations in main memory. As opposed to virtual memory, memory objects are not exclusively linked to processes. In fact, a process can create multiple independent memory objects. A memory object may be created as an efficient means to organize and access memory contents that are so interrelated to form a unit of information storage. This includes, for example, low-level features like constants, data variables, address variables, opcode/microcode and, more importantly, high-level programming language features such as arrays, callable units (e.g., functions, methods, subroutines), loops, matrices, vectors, trees, lists, classes and objects (as known from object-oriented programming), threads, etc. These and other features may be mixed and combined into predefined or user-defined units of information storage, i.e. memory objects. Eventually, stored information referenceable through the memory object may also include metadata, e.g., metadata about the memory object itself (date of creation, creating entity, size, permissions) and/or metadata about the information stored in the memory object's fragments, e.g. information on the data type and size of chunks of fragments (code chunk, data chunk, ...).

Different memory objects are distinguishable and can be referenced via a unique object identifier, called OID for short. A memory object may be empty upon creation, e.g., not yet contain any information stored in main memory or valid references to such information. The fragments contained in each memory object typically have a predefined size, e.g. 64 byte worth of physical memory in the distributed store, and can relate to any kind of information, including but not limited to, e.g., instructions (code), numerical data or operands consumed by the processing unit while executing instructions, and metadata associated with the memory object. Each fragment has a specific location within the memory object, which is indicated by an offset variable and used for addressing by the compute cores. Fragments that are consecutive in the memory object's logical address space can be structured into and collectively referenced as chunks; e.g. data chunks related to the storage of vector or array elements, or code chunks related to the storage of a set of program instructions.

A particular fragment of memory can be referenced by the combination of object identifier and fragment offset with respect to the memory object that is containing the fragment. This combination is unique across all coexisting memory objects that access information stored in computer memory, e.g. shared primary memory in a supercomputer comprising many compute cores that are each capable of generating and holding multiple memory objects. In consequence, a fragment of memory generally becomes inaccessible if the corresponding memory object ceases to exist, e.g. upon destruction of the memory object. On the other hand, the logical address space of each memory object is isolated from the logical address spaces of all the other coexisting memory objects, thereby improving computer security. Memory objects are an efficient implementation against unauthorized memory access, because the memory object that is requesting access to fragments belonging to a different memory object is unaware of the different memory object's identifier.

A further layer of security is added by the innovative fact that the different fragments of one and the same memory object are stored in very different and unrelated locations in physical memory, i.e. each memory object, when stored in physical memory, is scattered throughout the available physical address space. For instance, the calculated physical memory addresses for fragments of the memory object to be stored are distributed in a uniform and random fashion. At the same time, different memory objects are stored in a non-overlapping manner in physical memory. This makes it impossible for one memory object to overwrite fragments belonging to a different memory object.

Another difference between memory objects and conventional virtual memory implementations is that logical memory addresses of fragments of memory objects are not subjected to an address translation based on page table entries; instead, the physical addresses of locations in computer memory corresponding to the respective fragments of memory objects are calculated. This is a major advantage compared to conventional computer architectures that revolve around the concept of paging, because a calculation of the corresponding physical memory addresses does not require the use of large page tables. This frees up memory resources that would otherwise be allocated to the storage of the page tables. Moreover, multi-node computers in which information sharing between the individual nodes is desirable, the page tables maintained with respect to the different nodes need to be synchronized. A calculation-based mapping of each fragment's logical address onto the corresponding physical address is not confronted with the communication overhead and power consumption which arise out of the page table synchronization. Furthermore, the time needed for performing the calculation of the physical memory address of each fragment from the aforementioned unique combination of OID and fragment offset is deterministic. This is in contrast with the often unpredictable delay of information retrieval in the event of cache misses most conventional compute architectures experience.

A further advantage of embodiments of the invention over most conventional compute architectures and memory management techniques is that hierarchical multi-level cache memory is not needed. This saves hardware resources and energy related to the implementation and management of these traditional cache hierarchies. Indeed, data locality (in physical memory) cannot be exploited in embodiments of the invention as efficiently as it would be the case in conventional compute architecture with multi-level cache hierarchy, because consecutive fragments of a memory object are in general not mapped to nearby locations in the computer's main memory. Furthermore, in the absence of one or more levels of shared cache memory in multicore processor architectures, memory management is not facing the issue of cache coherency.

Nonetheless, it is possible for embodiments of the invention to provide a specialized kind of object cache and compute node-local memory subsystems, which temporarily stores the copied contents of one or multiple memory objects, or parts thereof, which have been fetched or prefetched from the distributed store. For instance, one or more object caches of a compute node in accordance with embodiments of the invention could temporarily store copies of recently accessed memory object fragments, prefetched memory object fragments that constitute data inputs to tasks scheduled for execution on one of the compute cores of the compute node, and/or fragments whose offsets are nearby the offset of previously accessed fragments within one or multiple memory objects.

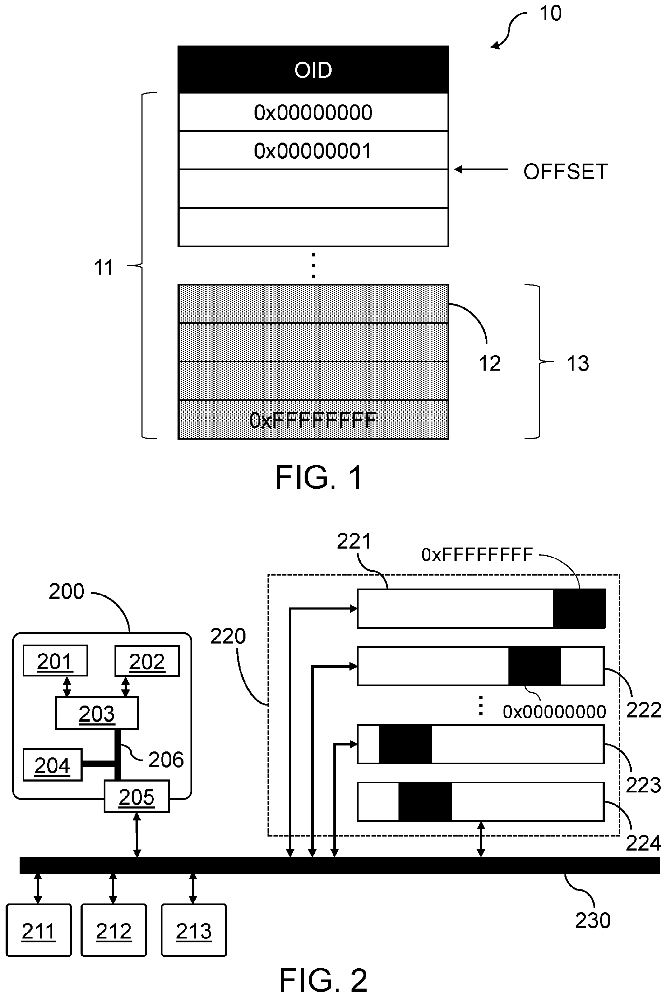

FIG. 1 graphically represents a memory object in accordance with embodiments of the invention as it is perceived by the at least one compute core of the compute node. The memory object 10 is identified through a unique OID and comprises a linear space 11 of logical memory addresses, e.g. 32-bit long logical memory addresses 0x00000000 through 0xFFFFFFFF. Nonetheless, the logical address space of the memory object may be smaller or larger, depending on the overall size of physical memory attributed to the supercomputer in which the compute node is deployed. Each logical memory address refers to a fragment 12 of information stored on the computer's primary memory and forming part of a larger semantic unit of memory content, i.e. the memory object 10. An offset variable 'OFFSET' is an index to the location of a particular fragment within the address space of the memory object to which is belongs. Fragments 12 are sized equally, e.g. each one 64 byte worth of physical storage, although different fragment sizes may be defined initially. Wider fragments have the advantage that more memory content can be accessed through a single load/store command, but require wider data busses too. A contiguous region within the memory object's logical address space 11 is clustered and assigned to a shard 13, which comprises a sequence of fragments. Although not shown in FIG. 1, it is the possible to create logical partitions of the address space associated with the memory object and equate each logical partition with a chunk of the memory object. Chunks can be used to separate different data types or data purposes in the memory object, e.g. separate one of more of: metadata, input data for tasks, user code to be executed on one of the compute cores, system-relevant data.

FIG. 2 illustrates the way the memory object is perceived form the perspective of the distributed store as the global computer main memory. The compute node 200 comprises a one or more compute core 201, 202 that are coupled through an object cache 203 of the compute node to the distributed store 220. The compute cores 201, 202 access memory object fragments directly from the object cache 203, or indirectly if memory object fragments held in the object cache are transferred onto a faster scratchpad memory (not shown) prior to consumption by the compute cores. Memory objects fragments for consumption by the compute cores 201, 202 are prefetched from the distributed store 220 and placed into the object cache 203. A memory object management unit (MOMU) 204 is configured to calculate the physical memory addresses of memory object fragment in the distributed store 220 for which memory access has been requested by the compute cores 201, 202. The MOMU 204 and the object cache 203, as well as other components of the compute node, are capable of exchanging messages over a node-local communication network 206, e.g. a system bus or a network-on-a-chip, NoC. A communication interface 205, e.g. a cluster network interface, connects the compute node 200 to a cluster-wide communication network 230. Further compute nodes 211, 212, 213 and the individual storage nodes 221, 212, 213 and 214 of the distributed store are also connected to the cluster-wide communication network 230. A unique network address is assigned to each addressable end node of the cluster-wide network 230, including the compute nodes 200, 211, 212, 213 and the storage nodes 221 to 224. The distributed store is assembled from a plurality of storage nodes 221 to 224, each containing a network interface and a memory module with memory controller (not shown). A portion of the physical memory addresses calculated by the MOMU 204 of each compute node, e.g. a bit field of predetermined length, preferably corresponds to the unique network address of one the storage nodes 221 to 224. The fragments of a single memory object 10 as shown in FIG. 1 are scattered across the different storage nodes 221 through 224 and indicated as black regions in their respective physical memories.

The compute cores 201, 202 may be any register-based processor core with RISC, CISC or VLIW-type architecture as known in the art. A typical compute core comprises multiple functional hardware units (e.g. instruction unit, execution units, control unit) and register sets as components. The functional units, in turn, may be constructed from several different or repeated subcomponents; the execution unit, for instance, may comprise one or multiple arithmetic logic units (ALUs), one or multiple floating-point unit (FPU), a load-store unit, etc.

Although the cores of a compute node can, in principle, reference individual fragments of memory objects for computational tasks, it is more efficient for the cores to access and consume information content from linear data spaces, e.g. vectors of data in the strict sense or sequential instructions (e.g. as generated by the compiler). Therefore, compute nodes in accordance with embodiments of the invention may optionally include at least one data formatting unit, which assembles fragments of a referenced memory object into 'views', whereby information utilization, e.g. data utilization, by the one or more cores of the compute node is improved. Data fragments can be extracted out of a memory object according to a view definition, which is by itself stored in the same or a different memory object and executed by a dedicated data address calculation unit. A particular view of a memory object may be generated by reordering and/or vectorizing a subset of the fragments contained in the original memory object such that the core(s) can consume the prepared views in a linear fashion.

A typical situation that benefits from the reordering and/or vectorization of data fragments is the access of elements of an array, in which the access follows a particular patterns (e.g. using a specific stride parameter). The preparation of suitable views for the respective cores by the at least one data formatting unit may be optimized by a compiler at compile time. Until being consumed by the core(s), individual memory object fragments, or views that are generated from accessed memory objects, may be placed temporarily into a scratchpad memory or register file of the core(s). More generally, cores of the compute node can execute compute tasks with respect to any memory object; different memory objects being distinguished through different addresses at the core level (e.g. the OID is part of the address at core level).

The memory object management unit 204 resembles the memory management unit (MMU) of conventional computer architectures in that it contains hardware for address translation. Traditionally, the MMU is configured for paging, i.e. the division of virtual address spaces into pages, and translation of virtual addresses into physical memory addresses by the use of page tables. Page table entries may be partly held in private memory of the MMU or a translation lookaside buffer (TLB), operatively coupled to the MMU, assists the MMU with the address translation task. TLB misses cause the CPU or the operating system to start a page walking process in which page table entries are retrieved from main memory. The MMU is also responsible for raising page fault exceptions in the event that no page table entry is found in main memory with respect to the virtual memory address currently being translated. A conventional MMU thus spends considerable amounts of time and energy to perform address translations by lookup operations in page tables. In contrast thereto, the memory object management unit (MOMU) in accordance with embodiments of the present invention is configured to derive the physical memory address corresponding to the memory object fragment that is referenced by the core by way of calculation. More specifically, the MOMU calculates the physical memory address as a function of the fragment offset and the OID for the memory object that contains the referenced fragment. In preferred embodiments of the invention, the MOMU calculates the physical memory addresses according to a hash function. Thence it follows that no lookup operations for page table entries are necessary, page tables do not have to be maintained in computer memory and page fault exceptions never occur. An OID generation unit of the MOMU may be configured to issue new OIDs in response to an OID request from a requester, e.g. a runtime manager of the compute node which requests new OIDs for child task memory objects or which requests a new OID for a data-type memory object to which the result of a mathematical computation or transformation (number or vector addition, multiplication, scaling operations or more complex arithmetic functions such as logarithms, exponentials, or trigonometric functions, and others) are written after execution the computation by the compute cores. In alternative embodiments, the OID generation unit of the MOMU can be implemented, e.g. embedded, in the runtime manager of the compute node. A particular type of memory access request messages is concerned with memory object manipulations that target the metadata associated with memory objects, e.g. metadata stored in a dedicated metadata chunk of the memory object, which may also include security attributes (access permissions) related to the memory object. These memory object manipulation operations may be handled by an object manipulation unit of the MOMU. They may include the splitting or merging of two distinct memory objects, the change of access permissions, and others.

In preferred embodiments of the invention, a portion of the calculated physical address, e.g. the k most significant bits, directly form a corresponding network address for one the memory modules, whereas the least significant bits can be used by a local memory controller of the receiving memory module to determine the location in the local memory that has been attributed to the memory module. Alternatively, a network address for the physical address can be obtained by calculation or via a lookup table.

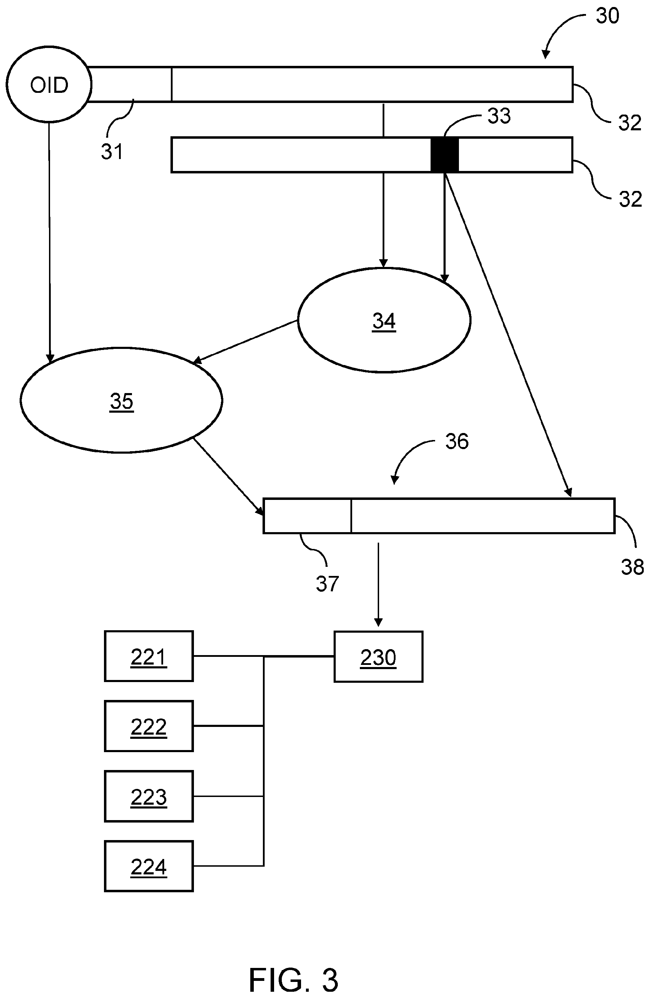

FIG. 3 illustrates the steps that the MOMU 204 of the compute node 200 performs when preparing a memory object fragment from the object cache 203 or node-local memory subsystem for transmission over a cluster network and storage on the distributed store 220. Memory object 30 depicts the continuous block of memory as perceived by the compute core. The memory object 30 contains a first chunk 31 that is allocated to metadata and a second chunk 32 that contains data. The compute core accesses information of fragment 33 in chunk 32 in the context of a write command. An OID is associated with memory object 30. The MOMU generates the OID upon creation of the memory object, typically when a task using this memory object is first evoked.

The MOMU uses the chunk index and the relative fragment offset within the second chunk 32 to compute the absolute offset of the fragment 33 in the memory object 30 in step 34. The absolute offset of fragment 33 and the OID are inputs to a hash function that the MOMU calculates in step 35. Next, the MOMU prepares a data packet 36 for submission over the node-internal communication network and the cluster-wide network, wherein a first portion 37 of the data packet 36 contains the output of the hash function from step 35 and a second portion 38 contains the information to be stored in the physical memory location associated with fragment 33. The most significant bits of the first portion 37 are identical to a network address of the cluster network 230 and thus identify the recipient of the data packet 36; in this case, the recipient corresponds to one of the memory modules in the storage nodes 221 to 224 . The least significant bits are used by the memory controller of the receiving memory module to determine the location in its own local memory, where the fragment information is stored.

Evaluating the output of the hash function (i.e., the hash value) in step 35 therefore amounts to the calculation of the physical memory address for memory contents to be loaded or stored. The computed hash values are used as indexes into a giant distributed hash table for information retrieval. The distributed hash table is formed by the joint memories of all memory modules of the distributed object store 220. The hash table entries correspond to the memory contents that are stored in the respective memory object fragments and are referenced by the physical memory addresses (the local memory addresses being the hashed keys). The use of a hash function ensures that physical memory addresses are distributed in a uniform-random way and that information can be accessed with uniform latency. Fragments belonging to one memory object are thus scattered across the distributed memory. Each fragment worth of information can be stored in multiple locations of the distributed memory object store, e.g. duplicated, to save a backup copy in the case of failure of one of the memory modules. Preferably, the hash function used by the MOMU is a minimum-collision hash function. Collisions can be detected at the level of the individual memory modules that compose the distributed memory object store; write request are locally checked against an allocation table. In the event that a collision is detected locally, the memory controller associated with the memory module relocates the information to be stored to an alternative storage location in memory. The allocation table may be configured to always provide at least one alternative storage location. Moreover, the MOMU may be configured to compute a series of hash values (orthogonal hashes) for each fragment to be stored in the distributed memory, e.g. up to four or more different physical memory location. If a collision is detected with respect to the first hash value of the series of hash values, and the alternative storage location is also occupied, then the fragment of information to be stored can be forwarded to the memory module corresponding to the next hash value in the series of hash values. In the rare case that collisions are detected with respect to all hash values of the series of hash values, and all the alternative storage locations are also occupied, the distributed object store considers main memory to be full and issues a write failure. This may result in the operating system displacing some memory contents into secondary memory storage devices.

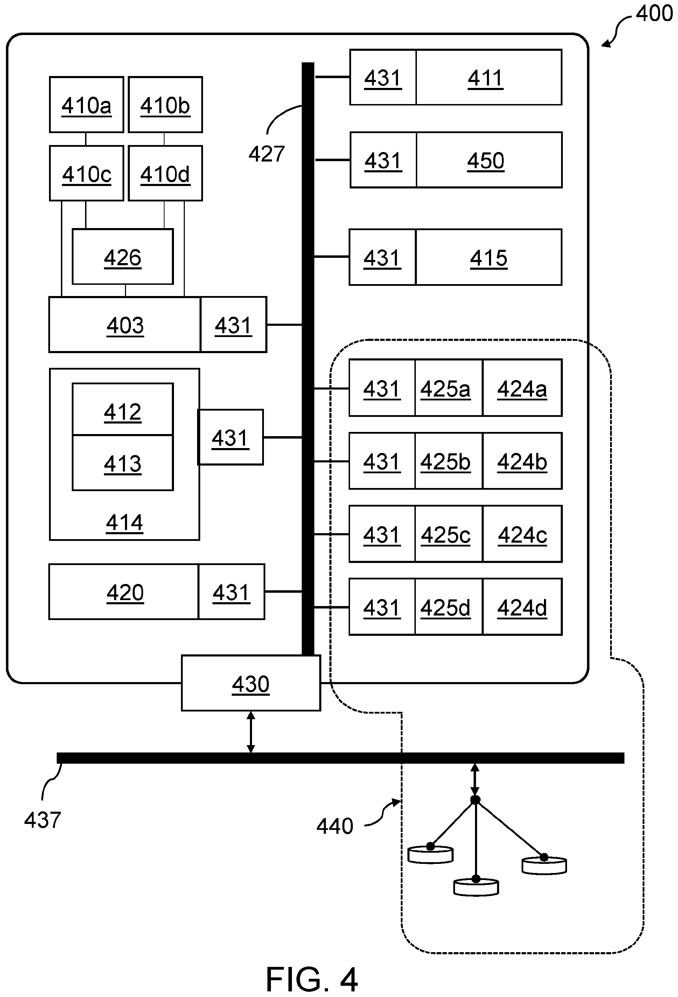

Referring now to FIG. 4, a block diagram of a compute node in accordance with an embodiments of the invention is described in more detail. The compute node 400 comprises compute core arrays 410a-d, an object cache 403, a memory object management unit (MOMU) 420, and a network interface 430 as node interface to a communication system or subsystem 437. Additionally, the compute node 400 comprises at least one task manager 411, data formatting units 412, address calculation units 413, a node-local memory subsystem 415, and node-local store units 424a-d with respective controllers 425a-d. The data formatting units 412 and address calculation units 413 may be arranged into combine data formatting/address calculation units 414, each being associated with and serving a respective one of the compute core arrays 410a-d. Preferably, a fast register file or scratchpad memory 426 is provided between the data formatting/address calculation units 414a-d and the compute core arrays 410a-d, wherein each core array comprises a plurality of compute cores, e.g. two, four, or more than four compute cores per array. A communication network 427, e.g. a network-on-chip, interconnects the various components of the compute node 400, which are all equipped with adequate network interfaces or communication ports 431.

In typical applications, the node-local store units 424a-d, e.g. DRAM modules or non-volatile memory modules, effectively contribute to the primary memory of a computing device composed of multiple similar or identical, interconnected compute nodes. Thus, the node-local store units 424a-d are generally treated like distributed store units of a larger computer memory system structured as a distributed store 440 for memory objects. In other words, the store units 424a-d are elements of a disaggregated memory model. In embodiments of the invention, store unit 424a-d may be assembled onto a circuit board for the compute node 400 or may be integrated onto a chip for the compute node. Memory access to each store unit 424a-d is controlled locally by a corresponding memory controller 425a-d.

Conventional compute cores are regularly operated in modes which allow the calculation of virtual memory addresses for fetching future data from main memory and the correct formatting of the fetched data for efficient use by the core's executions units. CPU cycles allocated to these tasks are lost for actual computational tasks performed on the data fetched from main memory. In the present embodiment, the data formatting units 412 and address calculation units 413 are functional units that are configured to perform the data formatting tasks and address calculation tasks, respectively, but have been moved out of the compute cores. This decoupling from the compute cores is also referred to as "decoupled memory" and has the advantage that data formatting units, address calculation units and compute cores can be operated to perform different tasks concurrently. Importantly, the compute cores can spent more cycles on computational tasks, while the address calculation units 413 determine the logical memory addresses of memory object fragments, e.g. containing data/operands for computations, to be consumed by the compute cores 410a-d in the near future. The address calculation units 413 may execute a kernel in order to execute view definition associated with a memory object, e.g. as specified in one or more metadata chunks of the memory object. Memory object fragments loaded or pre-fetched from the distributed memory object store 440 are referenced by the logical addresses computed by the address calculation units 413 and subsequently translated by the memory object management unit 420. Although most of the address calculation is handled by the address calculation units 413, it may still be the case that the compute cores 410a-d are occasionally used for address calculation tasks. The data formatting units 412 then handle the formatting of information from memory object fragments that have been loaded or prefetched from the distributed store 440. Formatting of data (including instructions) allows the compute cores to perform computations more efficiently. Information is not always stored in computer memory in a way that is adequate or optimal for computational tasks. For instance, instructions may have to be fused into more complex instructions for the compute cores, array elements may have to be aligned and rearranged into a vectorized format that is usable in vector operations by the compute cores, or number formats may have to be converted. In operation, the data formatting units thus prepare the loaded or pre-fetched information for future use by the compute cores. Information preparation tasks performed by the data formatting units include the following: data ordering, data vectorization, data type casting. The correctly formatted information is then transferred to the scratchpad memory 426, where it is buffered until one of the compute cores starts consuming it. Advantageously, the data formatting units also buffer differences in the information consumption rate between the compute cores on the one hand and the information fetching process on the other hand. The former is steady and synchronous, whereas the latter is asynchronous and out-of-order.

As explained before, the MOMU 420 is the functional unit of the compute node that handles memory objects, e.g., is hardwired or executes kernels that cause the creation and destruction of memory objects upon request by the task manager 411, generates the OIDs associated with a new memory object and communicates it to the task manager 411, controls the access of fragments within memory objects when reading information from or writing information into the distributed (memory object) store. In embodiments of the invention, the MOMU may generate the OID as a snowflake ID, e.g. combine timestamping information and a node identifier (unique) to obtain a memory object identifier (OID) that is unique. The MOMU may also be configured to initialize, execute and control prefetching operations on memory object fragments, e.g. by running a predictive prefetching algorithm that detects memory access patterns. Load/store commands are submitted to and handled by the MOMU 420 similarly to the steps explained with reference to FIG. 3, with the difference that a local copy of prefetched and/or repeatedly used memory object fragments, or even entire memory objects, may be kept in the node-local memory subsystem 415. In the present embodiment, the MOMU 420 thus first checks whether the node-local memory subsystem 415 is holding the information of a memory object fragment that is being referenced by one of the compute cores or prefetched by the MOMU. To this end, the MOMU may calculate a (shorter) local hash code from the fragment offset and the OID of the memory object containing the fragment and submit the local hash code to memory controller of the node-local memory subsystem 415, which in turn checks it against its private local cache hash table. If the requested fragment exists as entry of the local cache hash table, the information stored in the fragment is forwarded to the MOMU; otherwise, the MOMU will continue with the calculation of the physical memory address for accessing the requested fragment in the distributed object store 440 and prepare the corresponding network packet. In embodiments of the invention, the MOMU is not limited to the aforementioned tasks; it can also manipulate metadata that is stored in fragments of memory objects, e.g., to merge or split memory objects, and may further support memory object manipulations required for immutable data structures. In embodiments of the invention, a shorter local hash code for the memory subsystem and a global hash code for the distributed store can be obtained from a long hash, in order to cover the physical address spaces of the local memory subsystem and the distributed store, respectively. This can be achieved, e.g., either by selecting only a respective subset of the bits that compose the long hash, or by re-hashing the initial, long hash to smaller-sized local and global hashes. By way of example, a 64 bit long hash is calculated initially of which the lowest 12 bits are selected to cover the physical address space of a local memory subsystem with 4096 hash table entries (e.g., up to 4096 memory object shards in the local store), whereas the lowest 32 bits can be selected to cover the physical address space of the distributed store as global main memory with 2^32 hash table entries (e.g., up to 2^32 memory object shards in the distributed store). Alternatively, the 64 bit long hash can be re-hashed to smaller numbers that cover the different memory sizes.

In contrast to conventional compute architectures, information stored in the framework of memory objects does not have to undergo a lengthy search. When information is fetched from a remote node in traditional implementations multi-node compute clusters, the requesting node first checks all its cache levels before the operating system is queried, sends a message to the remote node, retrieved the requested data and finally hands it over to the requesting node. In embodiments of the invention, no such complex information retrieval process is necessary, because the MOMU of the requesting compute node can exactly locate the requested piece of information in memory through a calculation of the physical memory address. A network packed can then be issued directly to the distributed memory controller whose store unit holds the information. Hence, neither the operating system nor a central database is involved in the information retrieval, whereby resources and latency related to information access are significantly reduced.

An object storage firewall 450 may be configured to manage privileges, verify and grant access rights related to memory objects, or parts thereof, which are passing through and handled/translated by the MOMU 420. Further related to security, the node's communication interface rather than the node's MOMU handles encryption/deciphering of information, e.g. comprises a security manager and de-/encryption engine that perform encoding and decoding of operations on the information to be transmitted over the communication network. This further reduces information retrieval/memory access latency, because no encryption is required for information that is already present in the node-local memory subsystem 415.

The task manager 411, also referred to as runtime manager, is configured to allocate and assign tasks at runtime to the other components of compute node 400. Each task can be broken up into a sequence of subtasks, including, not necessarily in this order: the assignment of computational subtasks to the various compute cores of arrays 410a-d, the assignment of data formatting subtasks to the data formatting units 412, the assignment of address calculation subtasks to the address calculation units 413, fragment prefetching by the MOMU 420, and memory object creation/destruction requests to the MOMU 420. Not all the subtasks are always present in each sequence; there can be bubbles/gaps. The task manager 411 is also configured to control the timing and order in which the allocated tasks are performed by the other compute node components. A corresponding kernel may be executed by the task manager to this effect. In preferred embodiments of the invention, the task manager 411 controls the runtime behavior of allocated tasks such that different compute node components operate in parallel, i.e., perform different tasks concurrently. Moreover, the task manager 411 may implement pipelining of tasks in which subtasks have to be completed sequentially. Therefore, the data formatting units 412, address calculation units 413, and MOMU 420 may be assigned different tasks in the respective stages of the pipeline, but jointly complete a single task by progressively passing the outputs of a subtask in a current stage to the relevant unit of the next stage of the pipeline.

In embodiments of the present invention, the one or multiple task managers of the compute node may be implemented as traditional cores that are configured to create task objects - a special subtype of the generic memory objects - and pass the OID associated with the task object (task OID) to the data formatting units and compute cores for execution. Consequently, task managers in accordance with embodiments of the invention are also capable of generating new memory objects, e.g. task objects, which can be stored in the distributed memory object store (computer main memory) and local cache memory like any other type of memory object. This greatly simplifies the problem of task migration between different compute nodes. Additionally, the task manager(s) may be programmed to run a task scheduler (itself a task object) that assigns and times the execution of other task objects such as task objects related to data prefetching, data formatting, computations, memory object manipulation, etc. The task objects typically define operations on 'views' derived from memory objects.

In embodiments of the invention that provide multiple task managers, e.g. as part of the same compute node or distributed over several compute nodes of a multi-node supercomputer, an initial task manager is selected to start in a boot mode, which allows the compute node or supercomputer to accept user code (program code) as input, divide the user code into subtasks and hand these subtasks over to the other task managers, which may then accept subtasks for execution. Task scheduling, in the context of the present invention, is a considered itself as a particular type of task and may be part of the machine's firmware (i.e. compute node firmware).

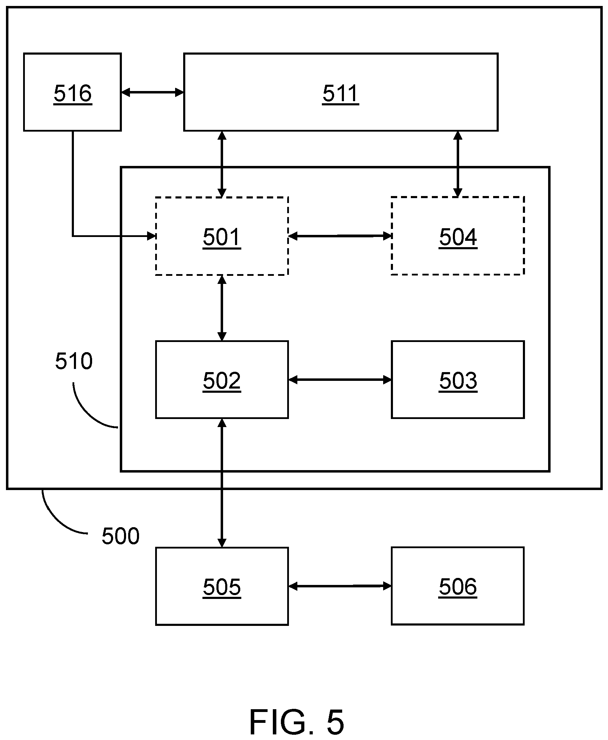

FIG. 5 explains the interactions between elements of hierarchical computer memory architecture which comprises a local memory subsystem for intermediary memory object storage at the compute node level and the distributed store as external main memory. Here, external means that all or the majority of the memory units that compose the main memory are not part of the compute node and are remote to the compute node, e.g. separated by a communication network. Moreover, main memory refers to the transient working memory that stores on a temporary basis all the code, system data, input data, output data and intermediate data that is required during execution of a user application. The main memory is the primary memory into which the program code of user applications is initially loaded for the purpose of executing it on one or more compute cores of the compute node. This contrasts with the secondary memory which persistently stores data even when the compute cores and the compute node is inactive. Intermediary memory object storage at the compute node level means that some of the memory objects or parts of memory objects (e.g. shards) that are present in the distributed store, which is farthest to the compute cores of the compute node and for which memory access has the longest latency, can be copied and these copies are moved to a local store of the compute node such that the local copies are located closer to the compute cores of the compute node and can be accessed faster.

The compute node 500 of the present embodiment comprises a memory object management unit (MOMU) 502 and a local memory subsystem 503. The memory subsystem 503 may comprise one or multiple hierarchical level of intermediary memory object storage and is operatively coupled through the MOMU 502 to the distributed store 506. Moreover, the memory subsystem 503 comprises a memory subsystem controller as principal control unit that manages and allocates storage resources for memory objects or object parts (e.g. shards) inside the memory subsystem, and executes and responds to memory access commands from the compute core(s) or the object cache. Storage resources within the memory subsystem may be provided by different hardware memories, e.g. a comparatively slower memory unit for main storage (over longer periods of time) and a comparatively faster memory unit for caching (during shorter time periods). A communication network 505, e.g. a cluster-wide network of a cluster computer, separates the compute node 500 from the storage nodes of the distributed store 506. In a cluster computer comprising a plurality of compute nodes, the distributed store for memory objects is the global main memory of the cluster computer that is common to all the compute nodes. The compute node 500 preferably comprises an object cache 501 that can hold a smaller amount of memory object fragments than the memory subsystem 503 but is located even closer to the one or more compute cores (not shown) of the compute node 500. Memory objects fragments in the object cache 501 can be directly accessed by the one or more compute cores 511 of the compute node. For instance, memory access commands issued by the one or more compute cores for the compute node may contain a direct reference to a cache line of the object cache. The one or more compute cores 511 are operatively coupled through the MOMU 502 to the memory subsystem 503 and to the distributed store 506. If the object cache 501 is present, the one or more compute cores 511 are operatively coupled through object cache 501 and the MOMU 502 to the memory subsystem 503 and to the distributed store 506.

A runtime management unit 516 of the compute node 500 is configured to dynamically link memory objects references to user or system code that is embedded in task objects, thereby obtaining executable kernel tasks, and schedule the kernel tasks for execution on one of the compute cores 511. Moreover, the runtime management unit 516 is configured to notify the memory subsystem 503 of the memory object identifier (OID) of memory objects that are inputs to a scheduled kernel task. This has the advantage that the memory subsystem 503 can anticipate future compute core memory accesses to these memory objects by the time the kernel task has been cleared for execution and prefetch memory object data from the distributed store in order to move the memory object data closer to the compute core and reduce memory access latency.

In embodiments of the invention, the metadata chunk of each memory object with regard to system-relevant information (e.g. as opposed to user-defined metadata) specifies the object type of the memory object, which allows the interpretation of the memory object contents present in the other chunk(s) of the memory object. The local object storage controller of the memory subsystem 503 is configured to access the metadata in the metadata chunk of the memory objects that have been notified to the memory subsystem 503 by the runtime management unit 516, which metadata is present on the distributed store, and detect the object type from the metadata. The local object storage controller of the memory subsystem 503 performs task-driven prefetching of memory object data, by issuing prefetch commands to another level of intermediary memory object storage of the memory subsystem or the distributed store. The prefetching command specifies a number of memory object shards of the notified memory object, or another memory object referred to in the metadata of the notified memory object, by their respective offsets in the associated logical address space. The number of memory object shards is dependent on the detected object type and the determination of their respective offsets may comprise the step of executing a small address calculation subroutine on the local object storage controller of the memory subsystem 503, which uses object view parameters embedded in the metadata of the notified memory object as inputs to the address calculation.

Memory objects are stored in multiple different locations on the distributes store 506, which each have a unique physical memory address. Likewise, copies of memory object fragments, e.g. prefetched parts of memory objects, are stored in different locations of the memory subsystem 503, which also have a unique physical address at the compute node level. This means that a reference to a specific memory object fragments or shard present in a downstream memory unit, which is only accessible through the MOMU 502, requires a physical memory address. In contrast thereto, the one or more compute cores and the object cache 501 refer to memory object fragments by the offset position in the logical address space that is associated with the memory object. Therefore, the MOMU 502 is the compute node element which translates object identifier (OID) and fragment offset information into physical memory addresses for the memory subsystem 503 and the distributed store 506. The MOMU 502 is configured to calculate the physical memory addresses as a function of the OID and fragment offset. For instance, the MOMU 502 calculates the physical addresses as outputs of a hash function that uses as the OID and fragment offset as keys. Access to memory objects on the distributed store 506 is requested in messages that are issued by compute node elements (e.g. object cache or memory subsystem), address-translated by the MOMU 502 if applicable, and transmitted over the communication network 505 to the distributed store 506.

In some embodiments of the invention, a scratchpad memory 504 may be provided in close proximity to the one or more compute cores of the compute node 500. Memory object fragments may be transferred to the scratchpad memory where they are optimally arranged for fast direct consumption by the one or more compute cores. In such embodiments of the invention, memory access commands by the one or more compute cores can target either the scratchpad memory or the object cache. The scratchpad memory 504, the object cache 501 and the local memory subsystem 503 form different levels of a node-local memory hierarchy 510, which also comprises the MOMU 502 as the unit that manages memory-related requests (read/write commands, deallocation and garbage collection commands) between the different levels of the hierarchical memory structure 510 and translates the memory object fragment offset into physical memory addresses of the distributed store 506. The addition of the distributed store 506 extends the node-local memory hierarchy 510 to a global memory hierarchy.

In embodiments of the invention comprising a local memory subsystem, the local memory subsystem and the distributed store form different levels of a hierarchical memory structure for memory objects. In such a hierarchical memory structure, lower levels are situated closer to the compute cores and have a lower associated latency compared to higher levels. Hence, the object cache has a lower level than the local memory subsystem, if present, and the local memory subsystem in turn has a lower level than the distributed store. In embodiments of the invention in which a scratchpad memory is placed next to the one or more compute cores, the level of the scratchpad memory is the lowest ranked level in the hierarchical memory structure for memory objects and usually has the shortest associated latency. The level of the distributed store is the highest ranked level in the hierarchical memory structure for memory objects and usually has the longest associated latency. The distributed store is also situated farthest from the compute cores of each compute node in the sense that it is separated from the compute node by a cluster network. Only in exceptional cases, when the compute node provides storage facilities for the distributed store and thus functions also as one of many storage nodes of the distributed store that are accessible over the cluster network, may it happen that the requested memory object fragment is actually located on the same compute node as the object cache that needs to be served.

It is noted that the granularity of memory accesses to the distributed store is typically coarser than the memory access to the object cache. For instance, memory accesses to the distributed store are performed at the shard level, whereas the line/block size of the object cache typically corresponds to a smaller number of successive fragments in the logical address space associated with a memory object which is only a fraction of one shard. The memory components of the local memory subsystem also typically store and retrieve memory object-related data at the shard level. In embodiments in which memory accesses to the distributed store are performed at the shard level, the MOMU is usually configured to derive the shard offset from the fragment offset, before calculating the physical memory address for the shard location in the distributed store. The physical memory address is calculated as a function of the shard offset and the memory object's OID for unpartitioned memory objects. If the logical address space associated with the memory object and representing the memory object vis-à-vis the compute cores is logically partitioned, i.e. comprises at least two logical partitions designated as chunks, the MOMU is configured to calculate the physical memory address for the shard location in the distributed store as a function of the chunk/partition identifier, the shard offset in the chunk, and the memory object's OID.

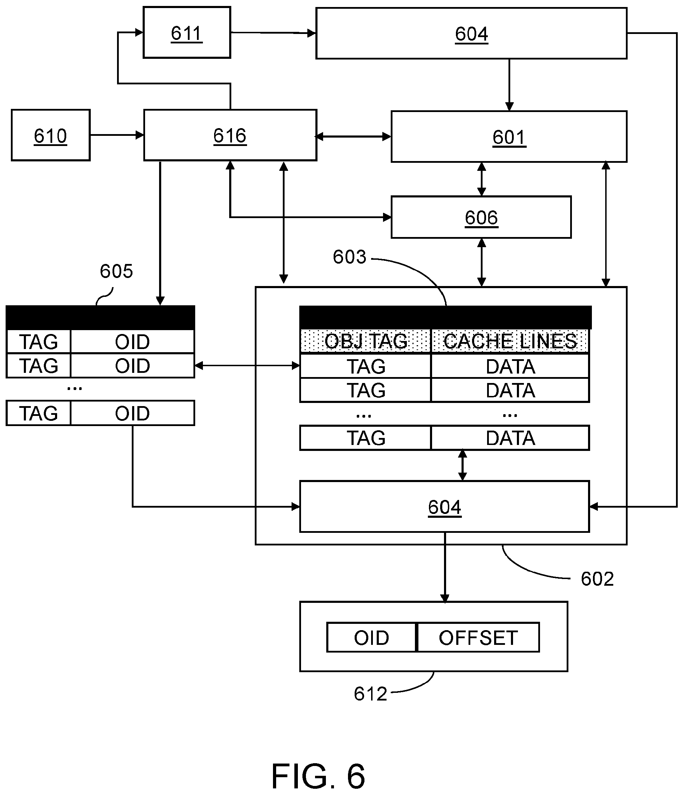

Referring now to FIG. 6, the task handling by the compute core of the compute node and its interaction with the object cache is explained in more detail. User code for execution by one or more compute cores 601 of the compute node is embedded in memory objects 610 of the task type. More specifically, the user code is split up into a series of indivisible or atomic task objects. A runtime manager 616 converts the user code in atomic tasks objects 610 into executable instruction code of a kernel task objects 611, by dynamically linking memory object references into the code at runtime. The runtime manager 616 then schedules the kernel tasks for execution on a specific compute core 601 of the compute node, e.g. in the form of threads. Kernel task objects are just another type of memory objects, which contain executable user code. In the same way as any memory object, a unique object identifier - a task object identifier or TOID - is assigned by the MOMU to each task-type memory object. The OIDs of memory objects upon which the user code depends are dynamically linked in the form of tags which are allocated by the runtime manager 616 and stored in a dictionary 605 of tagged memory objects. The dictionary 605 may be stored in a lookup table, e.g. a tag-OID table, which comprises a series of tags that have been allocated by the runtime manager 616 in a first column and the object identifiers of the memory objects to which the tags have been assigned as a second column. In embodiments of the invention, it is more efficient to use smaller-sized virtual tags instead of the larger-sized object identifiers 'OIDs' in the instruction code segments. The compute cores 601 and the data address calculation unit 606 both use a combination of virtual tag and fragment offset to identify and access a specific memory object fragment at execution time, while the controller 604 of the object cache 602 is configured to query the tag-OID table 605 to replace the virtual tags by their corresponding object identifier 'OID'. The tags are thus virtual and evanescent, and are not used by the MOMU, node-local memory subsystem and distributed store for the purposes of managing and accessing memory objects. Different tags can be assigned to the same memory object. If the lookup table is filled completely but new tags have to be allocated in the dictionary 605, the runtime manager 606 may decide to evict parts of the lookup table and store the evicted parts as memory objects of the system type (e.g. virtual tag subtype) on the distributed store from which they can be reloaded later on. A kernel task scheduled for execution on one of the compute node cores, e.g. a thread of a user process, which is awaiting clearance, may added to a thread queue and temporarily stored in the object cache memory 603. The object cache 602 is memory object-based and not related to a particular type of memory object, i.e. it can retain both code and data. Once the scheduled task or thread has been authorized for execution on the compute core 601, it is placed into an instruction cache 604. In embodiments of the invention, executable instructions must be located in the code chunk of the task-type memory object. Any attempt to execute instruction code from a different chunk such as the data chunk results in an exception. This has the benefit that code injection attacks can be avoided.

The data address calculation unit 606 is interposed between the compute cores 601 and the object cache 602. It receives object view definitions from the runtime manager 616, which causes the data address calculation unit 606 to execute a short program that determines a sequence of fragment offsets in the logical address space of a memory object that is an input to a kernel task, e.g. fragments that the compute core 601 will need as soon as the kernel task is executed on the core. View definitions may be embedded in one or more metadata chunks of memory objects of the view type and contain a set of view parameters with respect to another memory object (typically of the data type or of the view type for nested views). View parameters may comprise one or more of the following: an offset and a length; an offset, stride, size and number of addresses; a complex series of memory accesses that can be calculated by a series of data-independent operations.

Adjacent to the compute core 601 and data address calculation unit 606, an object cache 602 is provided to temporarily retain memory object fragments that are tasks inputs and thus accessed be the compute core 601 during task execution. Object cache 602 access by the compute cores 601 is typically through the data address calculation unit 606, which selects the memory object fragments for consumption by the compute cores 601 by their virtual tag and calculated fragment offset. However, the data address calculation unit 606 may be bypassed in simple accesses to the object cache 602 by one of the compute cores 601. The object cache 602 comprises a tagged data memory 603, which comprises a plurality of tagged cache lines. Each cache line has a data portion that is configured to hold a fixed-size block of memory object data (data block), e.g. 4kB worth of memory object content compared to 64B wide memory object fragments, as well as a tag portion that is configured to hold a virtual tag from the lookup table 605. Moreover, an offset within the logical address space associated with the memory object of which fragments are kept in a cache line of the data memory 603 is typically stored as a start address in a reserved portion of the cache line. When a complete shard of memory object content is to be retained in the object cache, e.g. 64kB worth of memory object content, multiple cache lines of the data memory 603 need to be allocated and each receive a different tag. This implies that different virtual tags can be assigned to the same memory object when different memory regions in the memory object are to be distinguished for unambiguous compute core accesses. Object caches 602 in accordance with embodiments of the invention thus use an addressing scheme that is based on the fragment offset and a tag representative of the object identifier.

A cache controller 604 of the object cache 602 controls read/write accesses to the object cache, handles cache misses, manages the eviction of cache lines in the data memory 603 if data needs to be loaded into an object cache that is full, and manages allocation of cache lines with respect to new, i.e. not yet retained, virtual tags/OIDS. Access commands from the compute core 601 and data address calculation unit 606 include the virtual tag and the fragment offset, e.g. as different bit fields in a long address, and the cache controller 604 verifies whether the virtual tag of the request is present in one of the tagged cache lines of the data memory 603 and whether the fragment offset lies within the address boundary of the memory object data that is held in the cache line. In case of a read command, a hit in the object cache 602 results in the retrieval of the requested data and the data is served to the compute core 601. If the requested data is not held in the object cache (read miss), the cache controller 604 issues a read request 612 to the MOMU 502, which includes the fragment offset and the OID for the miss (OID being retrieved from lookup table 605). The data address calculation unit 606 can prefill the object cache 602 by issuing a prefetch for the first calculated fragment offset. In embodiments of the invention, the cache controller 604 may follow a write-through policy for write commands from the compute core 601 and data address calculation unit 606, i.e., the data written to cache line of the data memory 603 is also written into the deeper levels of the hierarchical memory structure (local memory subsystem 503 and distributed store 506).

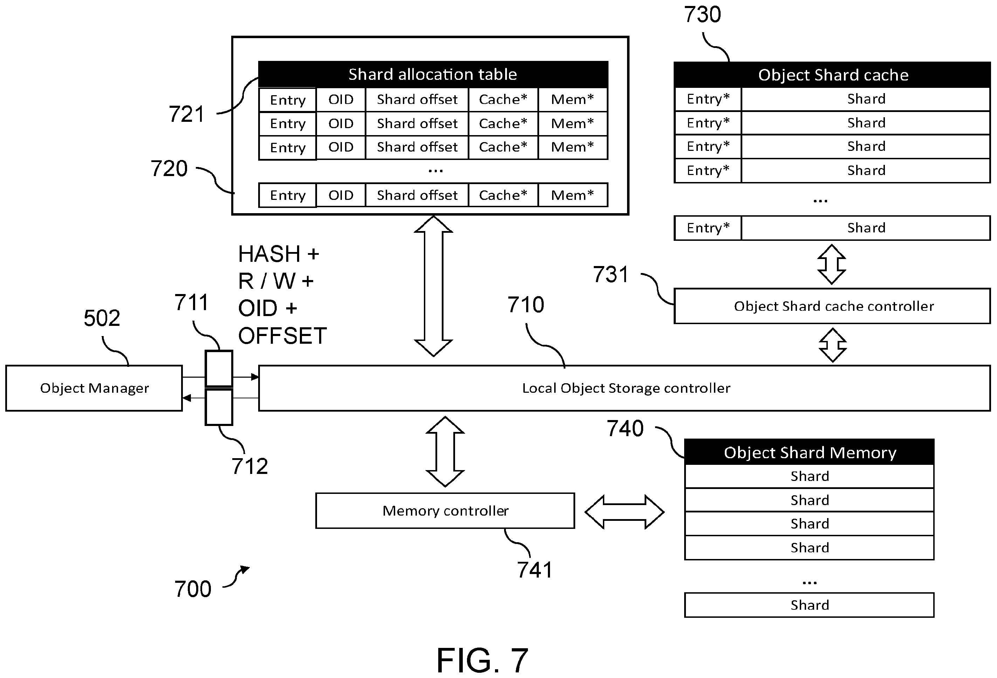

FIG. 7 is a block diagram that shows details of a local memory subsystem that can be used for local object storage in compute nodes in accordance with embodiments of the invention. The local memory subsystem 700 accounts for a single level of intermediary memory object storage and operates on a shard-level. That is memory resource allocation within the local memory subsystem 700 is performed at the level of individual memory object shards and complete memory object shards are exchanged between the local memory subsystem of the compute node and the distributed store, e.g. upon prefetching a shard from the distributed store and placing it into the local memory subsystem, or upon writing a shard from the local memory system back into the distributed store. Memory object fragments required by the compute cores of the compute node each reside in a corresponding shard and can be accessed through this shard. In embodiments of the invention, the shard offset is inferred from the absolute fragment offset. By way of example, the logical address associated with the fragment offset in the memory object's logical address space may be N+K bits wide, wherein the first N bits designate the shard offset and the remaining K bits specify the relative position/ offset of the fragment within the shard.

The memory subsystem 700 of the compute node comprises a local object storage controller 710, also referred to as memory subsystem controller, a first memory device 720 configured to hold an allocation table 721, a second memory device 730, and a third memory device 740. The third memory device 740 is configured to hold memory object shards that are copied from the distributed store. Furthermore, the second memory device 730 is configured to cache a subset of the memory object shards that are held by the third memory device. The memory subsystem 700 may comprise a shard cache controller 731 and a shard storage controller 741 as ancillary memory controllers that perform read, write and (de-)allocation operations for their respective memories 730 and 740. In the present embodiment, the first and second memory device 720, 730 are distinct devices, but a single memory device may be provided in alternative embodiments of the invention, which fulfils the functions of both the first and second memory device, i.e. allocation table storage and caching of memory object shards. As explained further below, the memory subsystem 700 may be reconfigurable.

The allocation table 721 comprises a plurality of rows, which are indexed by the hash/physical memory address in the distributed store. Each row stores, as separate values of a first row entry, the object identifier 'OID' corresponding to a shard present in the memory subsystem 700, the offset of the shard in the logical address space associated with the memory object to which the shard belongs, a pointer to a memory location in the second memory device 730, and a pointer to a location in the third memory device 740. The first row entry may be the only entry into the row. Nonetheless, particular embodiments of the invention may include further entries in each row, e.g. at least a second entry, which stores the same values as the first row entry. This has the benefit that different unique combinations of OID and shard offset but identical hash values, i.e. a collision in the allocation table, can be stored in separate row entries of the allocation table and the memory object shards they refer to can all be kept in the local memory subsystem 700. This avoids unnecessary forwarding of a memory access request. A flag indicating the status of each row entry, e.g. empty, occupied or deleted, may be additionally stored in each row of the allocation table 721. The pointer to the location in the third memory device 740 indicates where the memory object shard referenced by the physical memory/hash in the memory access request is currently held in the third memory device 740. Similarly, the pointer to the location in the second memory device 730, if valid, indicates where the memory object shard referenced by the physical memory/hash in the memory access request is currently cached in the second memory device 740. A zero-valued pointer 0x0000 may be used to designate invalid pointers to memory addresses in the second memory device 730. Alternatively, a "valid bit" may be added as another value in the row entries of the allocation table. More generally, embodiments of the invention may include additional information in each row entry of the allocation table. For instance, a "dirty bit" may be used to indicate writes to the local cache on the second memory device 730, which have not bee written to main storage on the third memory device 740. In embodiments of the invention, the allocation table 721 thus maps hashes of memory access requests or prefetch commands to the physical address in the local cache memory/object store (address space to rank/bank/page etc.) through the use of pointers.

The local object storage controller 710 is configured to retrieve memory access requests from the MOMU 502 from an input queue 711 and place response messages for the MOMU 502 onto an output queue 712. Each memory access request includes at least the physical memory address calculated by the MOMU 502 (e.g. the first hash value of a hash chain) and the type of memory access, e.g. read or write/modify. The physical memory address - a hash value - is used as an index into the allocation table 721, or the index into the allocation table is derived from the has value (e.g. by a modulo operation). As in most applications the number of memory objects created on a compute node exceeds the storage capacity of the local memory subsystem, which dictates the number of rows in the allocation table 721, hash collisions are likely to occur. Therefore, it is beneficial to include the object identifier (OID) and the shard offset in the logical address space associated with the memory object of which a fragment is requested, i.e. the initial hash keys, into the memory requests that are sent to the local memory subsystem 700, as this allows the resolution of hash collisions. Open addressing and/or separate chaining can be implemented for queries into the allocation table 721.

When a memory access to the local memory subsystem 700 is requested, the local object storage controller 710 uses the physical memory address/hash value that is embedded in the memory access request as an index into the allocation table 721, thereby selecting one of the rows of the allocation table. The local object storage controller 710 then verifies whether the requested memory object information is present in the memory subsystem 700, by comparing the combination of OID and shard offset included in the memory access request to the OID/shard offset combinations stored in the entries of the selected row of the allocation table721. If there is a match with one of the row entries (allocation table hit), then the requested memory object fragment indeed exists in the memory subsystem 700. Next, the local object storage controller 710 checks whether the cache pointer (e.g. pointer to a location in the second memory device 730) stored within the matched row entry is valid (cache hit), in which case the requested memory object fragment is present in both the cache memory, e.g. on the second memory device 730, and the local object store, e.g. on the third memory device 740. With regard to memory read operations, the target memory object fragment is then retrieved directly from the local cache memory on the second memory device 730, using the memory address indicated by the cache pointer, and embedded into a response message that is placed in the output queue 712. For write commands, the memory object fragment is written to both the local cache memory on the second memory device 730 and the local object store on the third memory device 740. If no valid cache pointer is found, then the requested memory object fragment is present only in the local object store (cache miss), e.g. on the third memory device 740. In memory read/write operations, the target memory object fragment is then retrieved from/written to the local object store on the third memory device 740, using the memory address indicated by the cache pointer. At this moment, it is possible to create a copy of the shard that contains the requested fragment in the cache memory on the second memory device 730. For memory read commands, the retrieved memory object fragment is embedded into a response message that is placed in the output queue 712.

If no row entry corresponds to the OID and shard offset combination of a read request, then local object storage controller 710 returns the read request to the MOMU 502 with a 'not found' statement. This means that the MOMU 502 will forward the read request to the distributed store. In contrast thereto, the OID and shard offset combination of a write request that does not yet exist as an entry in the selected row of the allocation table 721, the local object storage controller 710 may first check whether one of the entries of the selected row is unoccupied (e.g. empty or deleted) and if unoccupied, allocate this entry to the OID and shard offset combination of embedded in the write request, assign a free memory address of the local object store (e.g. on the third memory device 740) to this combination, and store the corresponding pointer in the allocated entry of the allocation table 721. The memory object fragment can then be written to the obtained memory address of the local object store, and optionally be cached on the second memory device 730 as well. Only if all entries in the selected row of the allocation table 721 are occupied will the local object storage controller 710 return the write request to the MOMU 502 with a 'memory subsystem full' statement. The write request will then be forwarded to the distributed store. In embodiments of the invention, a write-through policy is adapted when memory object data is written into the local memory subsystem 700, meaning that the written memory object data is simultaneously written to the distributed memory.

In embodiments of the invention, the memory subsystem of the compute node may be configured to read or write sequences of contiguous memory object fragments rather than only individual memory object fragments, provided that such sequences do not exceed the boundaries of a shard. Such sequences of memory object fragments are having the same shard offset in the logical address space associated with the memory object. For instance, a sequence of memory object fragments that corresponds to the data block size of the object cache accessed by the compute cores may be accessed.

Furthermore, the local object storage controller 710 is operatively coupled through the MOMU 502 to the object cache 501, in order to receive memory prefetch commands for memory objects that are accessed by the object cache. This kind of memory object data prefetching is referred to as prefetch on access. It allows to preload a complete shard from the distributed store into the local memory subsystem of the compute node whenever the object cache tries to access a smaller fraction thereof for the first time, e.g. when the object cache controller allocates a cache line/data block to an OID that is non-existent in the object cache memory or when the object cache controller encounters a cache miss for an OID that is existent in the object cache memory. A memory prefetch on access command specifies the object identifier (OID) of the memory object whose shard needs to be prefetched into the local memory subsystem 700, as well as the shard offset in the logical address space associated with the memory object, and the MOMU 502 provides the physical memory address/hash for this unique combination of OID and shard offset. In embodiments of the invention, prefetching commands are a special type of read commands that the local object storage controller 710 also retrieves from the input queue 711.

In addition thereto, the local memory subsystem 700 supports other kinds of prefetch commands, for example user-defined prefetch commands. User code is compiled and broken down into atomic (indivisible) tasks that the runtime manager schedules for execution on one of the compute cores of the compute node. Upon scheduling of an atomic task that relates to a user-defined prefetch command, the runtime manager issues a prefetch request to the local memory subsystem, which specifies the object identifier 'OID' of the memory object that is an input to the task. The local object storage controller 710 is operatively coupled through the MOMU 502 to the runtime manager 516, in order to receive memory user-defined prefetch commands for memory objects. Moreover, the local object storage controller 710 is configured to inquire the physical memory address/hash for the unique combination of received OID and offset of the first shard in the content portion of the memory object (e.g. first data chunk following the last metadata chunk of the metadata portion) from the MOMU 502. It is noted that the metadata chunk identifier which marks the end of the metadata portion of the memory object, and hence the subsequent identifier of the first data/code chunk, is available to the local object storage controller 710, e.g. is fixed system-wide or is defined in a fixed-sized system metadata part.

Prefetch commands of the aforementioned kinds are dealt with by the local object storage controller 710 in a way that is similar to write requests for non-existent OID/shard offset combinations. This means that the local object storage controller 710 first verifies that the OID/shard offset combination of the prefetch command is not already present in an entry of the allocation table 721. If this non-existence has been asserted, the local object storage controller 710 selects the row of the allocation table 721 that is indexed by the hash value imbedded in the prefetch command, populates the object identifier and shard offset values of an unoccupied row entry of the allocation table 721, based on the information included in the prefetch command from the runtime manager, and assign a free memory address of the local object (main) store, e.g. free memory address in the address space of the third memory device 740, which is stored as a storage pointer in this new entry. This reserves a memory portion in the third memory device 740, where the prefetched shard will be stored after successful retrieval form the distributed store. Likewise, it is possible to already assign a memory address in the address space of the second memory device 730 if the prefetched shard is to be placed directly into the local cache. Eventually, the local object storage controller 710 issues a read request to the distributed store which retrieves the desired shard from the distributed store and sends it to the local memory subsystem 700 of the compute node.

If the allocation table of the local memory subsystem is completely filled and the local object storage controller of the local memory subsystem receives another prefetch command, then the local object storage controller is configured to proceed with the eviction of row entries to free up the occupied row entries.

Yet another type of prefetching of memory object shards into the local memory subsystem 700 of the compute node is based on the metadata that is included in the metadata chunk of each memory object. More specifically, the object type is included in the metadata portion of each memory object. As explained before, the runtime manager schedules the tasks that are executed on one of the compute cores of the compute node, thereby detaining information on which memory objects the computer core will require as inputs to these tasks once they have been cleared for execution. In embodiments of the invention, the runtime manager is thus configured to send a prefetch command to the local memory subsystem 700 of the compute node, which specifies the object identifier 'OID' that appears as input object to the scheduled task awaiting clearance for execution. The local object storage controller 710 is configured to issue a read request to the distributed store which retrieves the metadata related to the memory object having the requested OID. This is indeed feasible since the metadata chunk has a predetermined size, whereby all shard offset are known a priori. The has function calculation unit of the MOMU 502 can thus calculate the physical memory addresses in the distributed store as hash codes of a hash function that accepts the unique combinations of OID and shard offset as hash keys. The local object storage controller 710 is further configured to extract the object type from the memory object metadata returned from the distributed store. Depending on the type of memory object, the local object storage controller 710 is configured to perform the following actions:
- prefetch the first few shards from the code chunk/partition of a code-type memory objects (analogous to the execution of the manual prefetch command, but requesting more than just the first shard);
- prefetch the first shard from the data chunk/partition of a data-type memory objects from the distributed store (analogous to the execution of the manual prefetch command);
- prefetch all the shards that span a virtual tag table from the system data chunk/partition of a system-type memory objects from the distributed store (analogous to the execution of the manual prefetch command, but involving a number of shards that are defined by the object metadata);
- execute an internal subroutine or small program of the local object storage controller if the memory object is of the view type, wherein the internal subroutine/program uses a reference to another memory object and view parameters that are embedded in the object's metadata as inputs and produces the offsets of one or multiple shards of the referenced memory object as outputs, and prefetch the shards that are outputs of the subroutine from the distributed store (analogous to the execution of the manual prefetch command, but involving a number of shards of a different memory object that are outputs of the subroutine).
In embodiments of the invention, the reference to another memory object is an object identifier, and the view parameters define a an access pattern within the address space of the referenced memory object, e.g. a start address and a stride parameter as view parameters of a strided access pattern.

In addition to the previously described ways of prefetching memory object data into the local memory subsystem of the compute node, it is possible to implement conventional predictive prefetching in the local memory subsystem. This can be achieved by providing the local object storage controller that is capable of running a predictive algorithm that determines, based on observed access patterns, which shard(s) of a memory object with known object identifier 'OID' are likely to be accessed in the near future.

Embodiments of the invention have the further advantage of supporting deallocation and garbage collection operations in addition to the traditional read/write operations. Deallocation and garbage collection requests are typically issued by the runtime manager and target all deeper level of the memory hierarchy that support addressing at the shard level, i.e. the single-level or multi)level local memory subsystem and the distributed store. As write or write requests to the local memory subsystem of the compute node, a deallocation request specifies the hash that is used as an index into the allocation table of the memory subsystem, and the unique combination of object identifier and shard offset. The local object storage controller is configured to select the row of the allocation table that corresponds to the has value of the deallocation request and verify whether the unique combination of object identifier and shard offset of the deallocation request matches with the unique combination of object identifier and shard offset of one of the occupied entries of the selected row. If there is a match/hit in the selected row, the shard currently held in the location of the main store of the memory subsystem (e.g. third memory device) that is indicated by the storage pointer of the matching row entry is cleared (e.g. overwritten with zeroes), and the matching row entry is marked as deleted or free. If a valid cache pointer is found in the matching row entry, the local object storage controller invalidates the cache pointer and/or erases the corresponding content in the cache memory. Garbage collection requests go beyond deallocation requests and allow the deletion of whole memory objects in the local memory subsystem of the compute node. A garbage collection request includes the object identifier of the memory object to be deleted from the local memory subsystem. In this case, the local object storage controller scans through all the rows of the allocation table in order to detect all row entries in the allocation table that contain the object identifier of the garbage collection request. The same steps as for a deallocation request are performed for each row entry in which the object identifier of the garbage collection request has been detected.

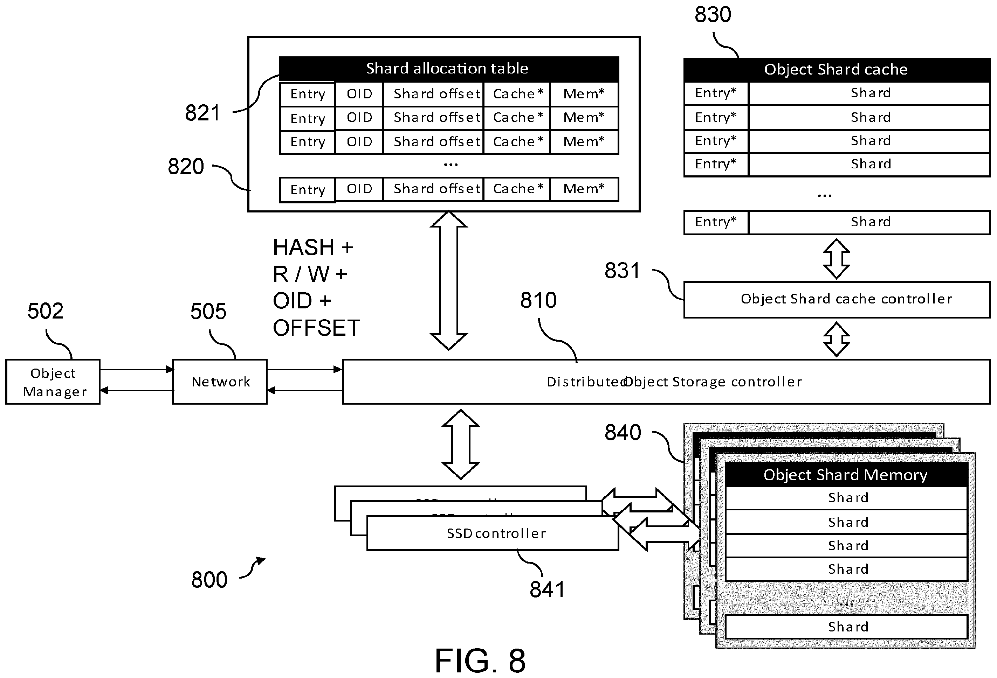

FIG. 8 is a block diagram that shows details of a local memory subsystem that can be used in storage nodes of a distributed store of a cluster computer in accordance with embodiments of the invention, wherein distributed store acts as a global, disaggregate main memory of the cluster computer. The memory subsystem 800 of the storage node operates on a shard-level, meaning that memory resource allocation within the memory subsystem 800 is performed at the level of individual memory object shards. The structure and functioning of the memory subsystem 800 for a storage node of the distributed store resembles the structure and functioning of the local memory subsystem of a compute node in that it also comprises a memory subsystem controller 810, a first memory device 820 configured to hold an allocation table 821, a second memory device 830 with cache functionality for memory object shards, and a third memory device 840 configured to hold memory object shards in the storage node of the distributed store. In particular, the second memory device 830 is configured to cache a subset of the memory object shards that are held by the third memory device 840. Here, the memory subsystem controller 810 is a distributed object storage controller, as memory objects are stored in multiple different locations on many different storage nodes of the distributed store and each storage node only holds a small fraction of each memory object. Statistically, it holds a 1/M fraction of any memory object, where M is the number of distributed storage units/nodes in the computer system.

Compared to the local memory subsystem of the compute node, the memory subsystem 800 of the storage node and the MOMU 502 of any compute node are separated by the machine-level network 505 and the capacity of the memory subsystem 800 is much larger. The memory subsystem 800 typically comprises a DRAM-based cache memory that resides on the second memory device 830 and a main storage memory such as non-volatile NVME SSD-based memory that resides on the third memory device 840. Moreover, the third memory device 840 typically comprises a plurality of storage modules as sub-units, e.g. a plurality of SSD memory modules. This means that memory accesses to the storage nodes of the distributed store have much longer latency, to which adds the network 505 latency. This makes the caching of write operations in the memory subsystem 800 an important factor, because the latency due to data writes onto an SSD-based memory would be very high in the absence of caching on the second memory device 830 and the object cache 501 of any compute node that is the origine of such a write message is waiting for a write confirmation from the deepest subsystem. The caching of memory reads is less important, as the probability of having the next shard in a sequence of a memory object shards stored on the same storage node decrease as 1/M, where M is the total number of storage nodes composing the distributed store. The memory subsystem 800 may further comprise a shard cache controller 831 and shard storage controller 841 as ancillary memory controllers that perform read, write and (de-)allocation operations for their respective memories 830 and 840. At the distributed storage level, the next few memory object shards following a memory access can be calculated by the distributed object storage controller 810, e.g. by inquiring the hash codes from the MOMU 502 or a local hash engine that correspond to the subsequent shard offsets and OID of the initially access memory object as hash keys. If at least one of those shards is located on the same storage node, then the at least one shard can be copied into the DRAM-based buffers of the second memory device 830. In some embodiments of the invention, storage nodes of the distributed store are collocated or even integrated with compute nodes.

In embodiments of the invention, the local memory subsystem may be reconfigurable. The reconfigurability may be limited to a single level of intermediary memory object storage or may be available in multiple levels of intermediary memory object storage in a hierarchical multi-level memory subsystem of the compute node. Each reconfigurable level of intermediary memory object storage in the local memory subsystem comprises at least three distinct types of memory devices: a first memory device that is operable as local cache memory for memory objects or memory object shards, a second memory device that is selectively operable as the local cache memory or as a part of a local store for memory objects or memory object shards, and a third memory device that is operable as a part of the local store. The first memory device has higher bandwidth and allows for faster access than the second and third memory devices, but typically has lower memory capacity than the second and third memory devices. The third memory device has the lowest bandwidth of the three memory devices, but typically has the largest memory capacity. By way of example, the first memory device may be an SRAM-based memory module or a collection of such modules, the second memory device may be a high-bandwidth memory (HBM) module or a collection of such modules, and the third memory device may be a SDRAM-based, DDR RAM-based or SDD-based memory module or a collection of such modules. The allocation table for the reconfigurable level of intermediary memory object storage is stored on the first memory device, since the allocation table is queried at every access of the reconfigurable level and pointers to locations in the local cache memory and the local store of the reconfigurable level have to be retrieved quickly.

Local cache functionality for the reconfigurable level can thus be mapped either onto a free portion of the first memory device (e.g. portion that is not occupied by allocation table entries) or onto the second memory device. Similarly, the local storage functionality for the reconfigurable level can be mapped onto one of the second memory device and the third memory device. Some memory regions of the distributed store are present, as copies, in the local storage memory of the reconfigurable level. Here, local storage acts as a main storage mechanisms of with respect to the local cache functionality, i.e. caching at this reconfigurable level of intermediary memory object storage is performed relative to memory object or object parts (e.g. shards) that are also present in the local store. If the local cache functionality is mapped onto the second memory device, then the local storage functionality is mapped onto the third memory device. Otherwise, the local cache functionality is mapped onto a free portion of the first memory device and the local storage functionality is preferably mapped onto the faster second memory device. In the latter case, the third memory device remains unused and may be deactivated temporarily. The dynamic reconfigurability, i.e. the dynamic selection of the mode of operation of the first and second memory device, is achieved by a control unit of the memory subsystem, e.g. the memory subsystem controller. That is, the local storage controller is further configured to select either the first memory device or the second memory device as a memory hardware resource for the local cache functionality in a first selection step, and select either the second memory device or the third memory device as a memory hardware resource for the local storage functionality in a second selection step, provided the second memory device has not been selected in the first selection step. The selection of the first selection step defines the destination and address space for the local cache pointers, while the selection of the second selection step defines the destination and address space of the local storage pointers in the entries of the allocation table. As a result, different address ranges within the reconfigurable level of intermediary memory object storage within the local memory subsystem can be dynamically mapped to different types of memory devices. Each type of memory device covers an address range that is private to the reconfigurable level of the local memory subsystem. When the memory subsystem is reconfigured in embodiments of the invention, this entails a rebuild of the content of the local store and implies a loss of content (only in the local memory subsystem, not for the global distributed store) when the capacity of the memory subsystem is decreased (e.g. mapping the cache functionality to the address space of the first portion of the first memory device).

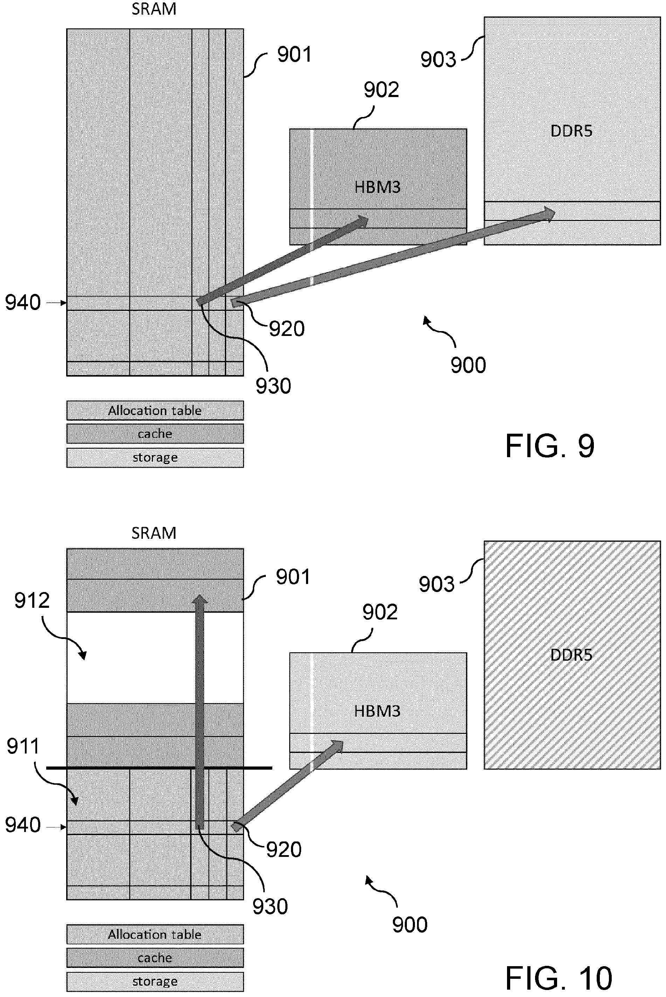

FIG. 9 and FIG. 10 illustrate two possible operation modes (e.g. working configurations) of the same reconfigurable level of intermediary memory object storage 900 in the local memory subsystem, in which the first memory 901 device is an SRAM memory unit, the second memory device 902 is a HBM memory unit (e.g. HBM3) and the third memory device 903 is a DDR RAM memory unit (e.g. DDR5). A memory subsystem controller (not shown) is configured to perform the address space mapping for the cache and storage functionality to the three different memory devices.

According to the first operation mode shown in FIG. 9, the allocation table resides in the first memory device 901, the cache functionality is mapped to the second memory device 902 and the local storage functionality is mapped to the third memory device 903. The cache pointers 930 in the allocation table thus point to memory addresses in the second memory device 902, and the storage pointers 920 to memory addresses in the third memory device 903. Allocation table entries 940 can fill the entire memory available on the first memory device 901, which allows storage of a larger number of entries and thus enabling access to a larger number of local copies of memory object fragments or shards at this reconfigurable level of the memory subsystem.

According to the second operation mode shown in FIG. 10, the allocation table resides in a first portion 911 of the first memory device 901 and the cache functionality is mapped to a second portion 912 of the first memory device. This is possible if the total amount of memory object data stored at this reconfigurable level 900 of the local memory subsystem is smaller than the maximum amount; the first memory device 901 is not completely filled with allocation table entries 940 in this case. The local storage functionality is mapped to the second memory device 902, and the third memory device 903 is unused. In consequence, the cache pointers 930 in the allocation table point to memory addresses in the first memory device 901, and the storage pointers 920 to memory addresses in the second memory device 902. Although this second mode of operation results in smaller storage capacity, much higher bandwidth can be obtained. Embodiments of this type have the additional advantage that the memory subsystem of the compute node can be reconfigured according to the expected workload, e.g. it can be dynamically decided whether more or less storage capacity is needed, or whether higher memory bandwidth is desirable.

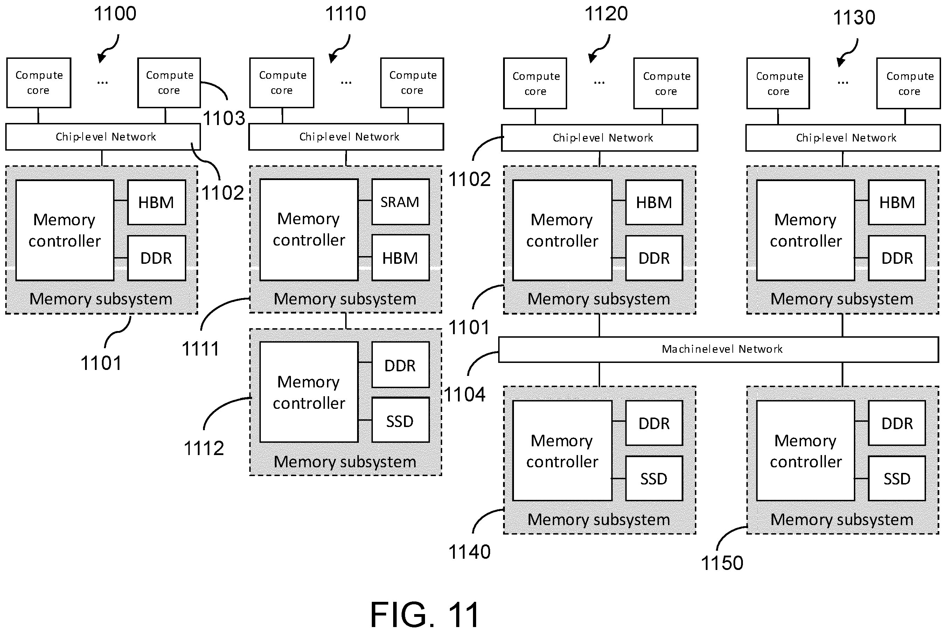

FIG. 11 illustrate three possible ways to utilize a node-local memory subsystem. On the left of the figure, a standalone compute node 1100 includes a local memory subsystem 1101 with a single level of intermediary memory object storage. Compute cores 1103 access the local memory subsystem 1101 through a chip-level communication network 1102, i.e., memory access requests from the compute cores 1103 are wrapped into messages that are transmitted over the chip-level network 1102 to the local memory subsystem 1102. If the required memory object fragment is not present on the local memory subsystem 1102, the memory request message is redirected to the node-external distributed store (not shown). The local memory subsystem 1102 comprises a memory controller, a local cache memory mapped onto a first memory device (e.g. HBM memory unit), and a local store mapped onto a second memory device (e.g. DDR memory unit).

In the middle of the figure, a standalone compute node 1110 includes a local memory subsystem with a two hierarchical levels of intermediary memory object storage 1111 and 1112. This demonstrates that the local memory subsystem of a compute node can itself be a hierarchical memory structure. Here, the second level of intermediary memory object storage 1112 of the memory subsystem depends on the first level of intermediary memory object storage 1111 and is accessed through the first level of intermediary memory object storage 1111. The first level of intermediary memory object storage 1111 can thus be considered as a cache-like first instance of a single-level memory subsystem to which the second level of intermediary memory object storage 1112 is appended as storage-like second instance of a single-level memory subsystem. The first level of intermediary memory object storage 1111 is provided with smaller and faster memory (e.g. SRAM as its internal cache and HBM as its main storage), whereas the second level of intermediary memory object storage 1112 is provided with larger but slower memory (e.g. DDR as its internal cache and a Solid-State Drive as its main storage). Compute cores of the compute node 1110 are operatively coupled through the first level of intermediary memory object storage 1111 to the second level of intermediary memory object storage 1112. Therefore, memory object fragments to be accessed by the compute cores are first searched for in the first level of intermediary memory object storage 1111. If the requested memory object fragments are not available in the first level of intermediary memory object storage 1111, e.g. a read miss occurs for the first level of intermediary memory object storage 1111, then the second level of intermediary memory object storage 1112 is queried. If present in the second level of intermediary memory object storage 1112, the requested memory object fragments are retrieved and sent back to the compute cores. The shards corresponding to the retrieved memory object fragments may be placed into the first level of intermediary memory object storage 1111 at this moment in time, e.g. stored in the local store and optionally also in the local cache of the first level of intermediary memory object storage 1111. This allows faster retrieval during future accesses to the same physical memory address. Eventually, if neither the first level of intermediary memory object storage 1111 nor the second level of intermediary memory object storage 1112 contains the requested memory object fragments, then a read miss from the local memory subsystem is reported to the MOMU and the MOMU will issue a memory request message for the missing memory object fragments to the external distributed store, where they can always be accessed. A write-through policy can be followed by the memory subsystem controller (not shown) when responding to write commands. The information is then written to the respective memory object fragments at both levels of intermediary memory object storage 1111, 1112. More levels of intermediary memory object storage may be added in other embodiments of the invention, and multiple instances of single-level memory subsystems can be connected in all kinds of tree hierarchies. Importantly, coherence across the various levels of intermediary memory object storage in the local memory subsystem is not required. Indeed, access permissions to a memory object can be given to tasks that manipulate this memory object and enforced at the hardware level in such a way that immutability of the memory object results: only the one task that has ownership is allowed to write to the memory object and any other task either only reads, or has no access at all. Modifications to memory objects are rather stored in new memory objects. The coherence problem is thus solved, when the runtime manager withholds the release of the memory object's OID to non-owner tasks that intend to read from the memory object before the write-through to the global memory has been acknowledged. As the owner task is bound to a particular compute-node, inter-node coherence is not an issue. And read-after-write consistency for the owner task can be ensured by the local and distributed memory subsystem controllers.

On the right of the figure, two compute nodes 1120, 1130 and two storage nodes 1140, 1150 of the distributed store are interconnected through a machine-level/computer-level communication network 1104, e.g. from part of a cluster computer. Each compute node 1120, 1130 is similar to the standalone compute node 1100 and comprises its own local memory subsystem 1101. Each storage node 1140, 1150 may comprise a memory subsystem that corresponds to a slower instance of the single-level memory subsystem 1101 that is utilized by the compute nodes 1120, 1130. Exemplary storage nodes 1140, 1150 of the distributed store thus contain a memory controller, a first memory device with cache functionality (e.g. DDR RAM memory) and a second memory device with storage functionality (e.g. SSD memory). As explained below, in this distributed computing context, i.e. multiple compute nodes and storage nodes, each having its local memory subsystem, the storage nodes may be organized, e.g. logically linked, into chains, in order to store memory objects or object parts (e.g. shards) redundantly on multiple different storage nodes.

In embodiments of the invention in which one or more compute nodes are coupled to a plurality of storage nodes which compose the distributed store for memory objects, e.g. in a cluster computer, memory objects or parts of memory objects (e.g. shards) may be stored redundantly on multiple different storage nodes. This allows the compute system, e.g. cluster computer, to be resilient to storage node failures. If a storage node fails and needs to be replaced, the memory object information stored thereon is not lost definitely, because the redundant copies on the remaining storage nodes are still intact. After replacement of the failed storage node by a new storage node, the previously memorized content of the failed storage node can be rebuilt on the new storage node, by querying the remainder of the storage nodes in the compute system for any redundant copy they might hold and sending this copy to the storage node which is replacing the failed storage node. More importantly, normal operation of the compute system is maintained at all time during the storage node failure and replacement process, and no system crash is caused by the storage node failure, as all read operations that would normally be handled by the failed storage node are now handled by the redundant storage node(s) of the chain, which hold the other copy or copies.

Multiple storage nodes are logically linked into chains by an underlying linked list of physical memory addresses in the distributed store, which comprises at least two separate physical memory addresses for one and the same memory object fragment. The MOMU of each compute node may be configured to create such a linked list of physical memory addresses upon translation of the OID and memory object fragment offset information into a unique physical memory address of the distributed store. This can be achieved by calculating a series of physical memory address as a series of mutually orthogonal hash values which form a chain (e.g., using the same hash function but at least one additional hash key that differs for each item of the series). In consequence, each hash value of the series of orthogonal hash values points to a different memory address of the distributed store and, since hash values are preferably distributed uniformly across the physical address space for the distributed store, most likely point to a different storage node. The hash values of the chain are then linked, by embedding the first hash value of the chain as the default memory address and the remaining hash values as auxiliary memory addresses into read and write requests of the compute node MOMU that are sent to the distributed store. When a write command is executed by the memory subsystem of the storage node of the distributed store that is addressed by the first hash value of the request, this memory subsystem will also forward this write command to the memory subsystem of another storage node of the distributed store in accordance with the auxiliary physical memory address that corresponds to the next hash value in the chain, where the command is in turn executed. This process is continued until the write command has been executed with respect to the last hash value in the chain, resulting in N copies of the memory object fragment or shard for a chain with N hashes. Read commands are usually sent to and executed by the memory subsystem of the storage node of the distributed store that is addressed by the first hash value of the request. If that storage node is not available, e.g. has failed or is malfunctioning, the compute node that issued the command is notified and the MOMU can re-send the request to the memory subsystem of the storage node of the distributed store that is addressed by the second hash value of the chain, and this process is repeated until either the memory object fragment to be read is found on a storage node of the distributed store or the chain exhausted. In alternative embodiments, the non-availability of storage nodes is detected by the machine-level network and the read request is forwarded to the memory subsystem of the storage node of the distributed store that is addressed by the second hash value of the chain.

The preceding embodiments related to redundant storage of memory objects or objects parts may be modified in the sense that not multiple copies are stored as the way to obtain redundancy, but error correcting code or outputs of such code are stored on a different storage node as the redundant information. Robustness of the compute system can be further increased in embodiments which combine the two redundancy mechanisms, i.e. storing multiple copies of memory objects or objects parts on multiple different storage nodes and storing error-correction code (output) in yet another location within the distributed store, e.g. at least a third storage node.

For a limited number of hash values in the hash chain, embodiments of the invention may be adapted to keep track of where an additional copy, e.g. the second copy, of the memory object fragment is actually located in the distributed store. Keeping a primary copy and a secondary copy of a memory object or object part in the memory may be sufficient to guarantee the rebuilding of failed storage nodes is economical in terms of storage overhead. The location of the second copy in the distributed store may not always be equal to the memory address that corresponds to the second hash value in the chain, e.g. in situations where the second hash value refers to an inactive or failed storage node or a storage node that is temporarily saturated and barred from storing additional data. The location of the second copy residing in the distributed store can be stored as an additional parameter in the allocation table of the memory subsystem of the storage node that stores the primary copy, and vice versa. This can be achieved by performing the following steps:
- write memory object data at the location in the distributed store that is indicated by the first hash value, thus creating the primary or authentic copy;
- forwarding the write command to the next location in the distributed store that is indicated by the next hash value in the chain;
- at the next location, write memory object data to obtain the secondary copy, provided free memory is available at this location and otherwise repeat the previous step;
- write the memory address of the primary copy as indicated by the first hash value into the allocation table entry of the memory subsystem that points to the location of the secondary copy in that memory subsystem;
- send the memory address of the secondary copy as indicated by the corresponding hash value back to the memory subsystem of the storage node that holds the primary copy;
- write the memory address of the secondary copy into the allocation table entry of the memory subsystem that points to the location of the primary copy in that memory subsystem.

The invention also relates to a multi-node multiprocessing computer for high-performance computing applications. The multiprocessing computer - a cluster computer - comprises a plurality of compute nodes according to embodiments of the first aspect of the present invention and the distributed store as computer main memory. The compute nodes have the advantage of being highly scalable base units for assembling the supercomputer. Here, multiprocessing relates to the parallel execution of more than one computer program, e.g. application processes or user programs, and the resources required therefor. Each process may create one or multiple threads, which are smaller executable entities related to the process that typically share the same memory resources. Moreover, a task typically refers to a unit of work being executed, whereas a process rather specifies what needs to be done, independently of it "being done" right now. In embodiments, a small operating system may be provided that performs thread handling (e.g. FreeRTOS).

In the cluster computer, the multiple compute nodes are operatively connected through a communication network, i.e., form a set of interconnected network nodes. The communication network typically comprises a node-internal communication subsystem, e.g. a network-on-chip, and an intra-node communication subsystem, e.g., ethernet network and/or optical fiber communication network. The compute nodes all have a network interface module and can be addressed by a portion of the network address. Node-internal components can all be reached via full network addresses.

The distributed computer main memory is provided by a plurality of storage nodes that each comprise at least one memory units for distributed memory object storage, e.g. DRAM-based or SSD-based memory modules. The plurality of storage nodes may be distributed over a plurality of locations, i.e., form a computer main memory that is decentralized. Access to the distributed memory units is controlled independently for each storage node by a local memory controller. In particular embodiments of the invention, the memory units composing the disaggregated computer main memory are all assembled into the compute nodes of the cluster computer and the compute nodes also act as storage nodes. In such embodiments, each compute node may contain at least one memory unit as a fraction of the global disaggregated computer memory. In other embodiments of the invention, the storage nodes of the cluster computer are different from the compute nodes of the cluster computer. In yet other embodiments, the disaggregated computer memory of the cluster computer may be composed of a mix of independent storage nodes with dedicated memory units and compute nodes that also act as storage nodes (e.g. integrating a memory unit of the global distributed store).

In embodiments of the invention, stored fragments of each individual memory object are scattered over the whole distributed store as global computer main memory, e.g. distributed in a random and uniform manner over the physical address space associated with the global computer main memory. The MOMU of each compute node can quickly compute the physical memory address corresponding to memory fragments accessed by the compute cores of that same compute node and thus gather memory object fragments that are scattered over a large number of remote store nodes in a node-local prefetch memory (local memory subsystem of the compute node). Stored memory object fragments can also be shared among multiple tasks that are executed by compute cores belonging to different compute nodes. Tasks executed on one compute node generate memory objects that normally cannot be accessed on the distributed store through MOMUs of different compute nodes, because their respective OIDs are dependent on the compute node and will not be known by other compute nodes. However, compute nodes may still exchange OID information in the context of shared memory resources over the communication network. OIDs may be shared just like any data, i.e. the value of an OID is an output from one task and input for another task. In order to access memory object content on a different compute node than the compute node that first created this memory object, the object storage firewall of the different compute node first has to verify that the correct access rights have been granted. For instance, read permissions may be granted for a pool of tasks that have been assigned to the same first security group, irrespective of the compute nodes cores that are actually executing the tasks. If no or insufficient/wrong access right have been granted, the access will be denied. Typically only the creator/owner task of an OID can write, while others have read access. Software locks may be used to handle write permissions set by the programmer.

As described previously, the compute nodes composing the supercomputer may each contain an object cache memory that is storing memory objects, or relevant parts thereof, at the node-level. Even though it is feasible to maintain more than one local copy of a memory object, or fragments thereof, in a corresponding number of compute nodes, not every compute node is allowed to modify or write into a memory object that is a shared resource. More specifically, only the node-bound creator task that caused the generation of the memory object as shared resource may have the rights to alter the contents of the memory object, while tasks that are not native to the node are lacking these rights. Tasks running on different nodes may still be able to read information content of shared memory objects that are stored in the local object cache memory. Typically, no consumer task is spawned while a producer task is running on the same object (data dependency check in task graph), such that a programming model for this computer architecture is capable of anticipating write inconsistencies in shared memory objects.

While the invention has been illustrated and described in detail in the drawings and foregoing description, such illustration and description are to be considered illustrative or exemplary and not restrictive. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. Any reference signs in the claims should not be construed as limiting the scope.

## Claims

1. An object-based compute node (500) for a multi-node multiprocessing computer, comprising:
at least one compute core (511) for executing tasks requiring memory objects as inputs, each memory object being assigned a unique object identifier (OID) and composed of a plurality of fragments accessible on a distributed store, storage locations within the distributed store being referenced by physical addresses, wherein the at least one compute core is configured to access the fragments of each memory object through offsets in a contiguous logical address space associated with the memory object;
a memory subsystem (503; 700) comprising at least one level of intermediary memory object storage, the at least one compute core being operatively coupled through said memory subsystem to the distributed store as the main memory for the compute node, wherein a first level of intermediary memory object storage of the memory subsystem comprises a local store (740) for storing memory object fragments accessed on the compute node and a local storage controller (710);
an object management unit (502) interposed between the at least one compute core and the memory subsystem, the object management unit being configured to map logical addresses of memory object fragments to unique physical addresses of the distributed store, by calculating the physical address for each memory object fragment from a combination of the corresponding object identifier (OID) and fragment offset within the logical address space associated with the memory object;
a runtime management unit (516) for scheduling tasks for execution on the at least one compute core, said runtime management unit being configured to notify the memory subsystem of the memory object identifier (OID) of memory objects that are inputs to a scheduled task, this defining notified memory objects;
wherein each memory object further comprises a metadata portion as one of at least two different partitions of the logical address space associated with the memory object, said metadata portion specifying an object type for interpreting content present in the remaining partitions of the memory object;
wherein the local storage controller of the first level of intermediary memory object storage is configured to access the metadata portion and detecting the object type included in the metadata portion of each notified memory object, and command prefetching of a number of fragments of the notified memory object, or another memory object referred to in the metadata portion of the notified memory object, from another level of intermediary memory object storage of the memory subsystem or the distributed store, wherein the number of fragments and the offset of each one of said number of fragments is dependent on the object type.

2. The compute node of claim 1, wherein the metadata portion of memory objects belonging to a data view type includes an object identifier (OID) as reference to another memory object and parameters defining a view of said other memory object, wherein the parameters cause the local storage controller of the first level of intermediary memory object storage to execute a subroutine that produces the offset of each one of said number of fragments of said other memory object.

3. The compute node according to claim 1 or 2, wherein the runtime management unit is configured to notify the memory subsystem of the memory object identifier (OID) in conjunction with a target fragment in the notified memory object;
wherein the local storage controller of the first level of intermediary memory object storage of the memory subsystem is further configured to command prefetching of the target fragment in the notified memory object.

4. The compute node of any one of the preceding claims, further comprising:
an object cache (501) interposed between the at least one compute core and the object management unit, for serving memory access requests issued by the at least one compute core, the at least one compute core being operatively coupled through said object cache and said memory subsystem to the distributed store, each memory access request from the at least one compute core including the offset and a virtual tag representative of the object identifier (OID) for a requested memory object fragment;
an object allocation table for storing the object identifiers (OID) of memory objects to be accessed by the at least one compute core alongside with the corresponding virtual tags; wherein the object cache comprises a plurality of cache lines, each cache line comprising a data portion for retaining copies of the memory object fragments required by the at least one compute core and a tag portion for retaining the virtual tag assigned to the memory object of which fragments are retained in the data portion;
wherein a cache controller of the object cache is configured to:
compare the virtual tag included in the memory access request from the at least one compute core to the virtual tags stored in the tag portions of the cache lines,
access one of the memory object fragments retained in a cache line, using the offset included in said memory access request from the at least one compute core to determine an offset location in the cache line, provided that the virtual tag for this cache line matches the virtual tag included in said memory access request from the at least one compute core,
replace the virtual tag included in said memory access request by the corresponding object identifier (OID) stored in the object allocation table and redirect the memory access request from the at least one compute core to the memory object management unit if none of the virtual tags stored in the tag portions of the cache lines matches the virtual tag included in said memory access request from the at least one compute core.

5. The compute node of claim 4, further comprising an address calculation unit associated with the at least one compute core, the address calculation unit being configured to calculate the fragment offsets in the logical address spaces of the memory objects to be processed by the at least one compute core, and issue memory access requests on behalf of the at least one compute core directly to the object cache.

6. The compute node according to claim 4 or 5, wherein the runtime management unit is further configured to identify memory objects that are inputs to a task scheduled for execution, assign virtual tags to the memory objects identified as task inputs, and allocate entries for the virtual tags in the object allocation table.

7. The compute node of any one of the preceding claims, wherein the first level of intermediary memory object storage of the memory subsystem further comprises a local cache memory for caching a subset of the memory object fragments accessed on the compute node and stored on the local store.

8. The compute node according to claim 7, wherein the first level of intermediary memory object storage of the memory subsystem further comprises an allocation table comprising a plurality of row entries, each row entry being configured for storing a combination of object identifier (OID) and fragment offset alongside with a storage pointer to a location in the local store and a cache pointer to a location in the local cache memory;
wherein the object management unit is configured to receive memory requests for a combination of object identifier (OID) and fragment offset, include the physical address calculated for the combination of object identifier and fragment offset in the memory request, and forward the memory request to the memory subsystem;
wherein the local storage controller is further configured to:
receive the memory request from the object management unit;
select a row of the allocation table based on the physical address embedded in the memory request,
verify the object identifier (OID) and fragment offset embedded within the memory access request against the object identifier (OID) and fragment offset stored in the row entries of the selected allocation table row, and select a matching row entry;
verify the validity of the cache pointer stored in the selected row entry;
dispatch at least one auxiliary memory access request, contingent on an outcome of a verification of said validity of said cache pointer, to the local cache memory, the local store, or both, thus serving the memory access request, wherein the at least one auxiliary memory access request includes the locations indicated by the pointers stored in the selected row entry;
generate either an error message or a new row entry in the allocation table if none of the row entries of the selected allocation table row matches the object identifier (OID) and fragment offset embedded in the memory access request;
optionally, clear each row entry of the allocation table that matches either the object identifier (OID) or both the object identifier (OID) and fragment offset embedded within a deallocation request, and erase the memory object fragments kept in the locations of the local store as indicated by the storage pointers of the row entries of the allocation table cleared by the deallocation request.

9. The compute node according to claim 8, wherein the first level of intermediary memory object storage of the memory subsystem comprises a first, a second and a third memory device;
wherein the allocation table is stored on the first memory device having a higher bandwidth compared to the second memory device;
wherein a portion of the first memory device is selectively operable as the local cache memory, the second memory device is selectively operable as the local cache memory or as a part of the local store, and the third memory device is operable as a part of the local store;
wherein the local storage controller is further configured to:
select either the portion of the first memory device or the second memory device as a memory resource for the local cache memory, and map the cache pointers in the allocation table to an address space associated with the memory device selected as the memory resource for the local cache memory;
select either the second memory device or the third memory device as a memory resource for the local store, and map the storage pointers in the allocation table to an address space associated with the memory device selected as the memory resource for the local store, provided that the second memory device is deselected as the memory resource for the local cache memory.

10. The compute node of any one of the preceding claims, wherein the local storage controller of the first level of intermediary memory object storage of the memory subsystem is further configured to predict future accesses to memory object fragments based on past history of accesses to memory object fragments.

11. The compute node of any one of the preceding claims, wherein the memory subsystem comprises multiple levels of intermediary memory object storage, each level of intermediary memory object storage comprising a local store for storing memory object fragments accessed on the compute node and a local storage controller, the local stores of levels of intermediary memory object storage closer to the at least one compute core being faster but of lower memory capacity than the local stores of more remote levels of intermediary memory object storage, wherein the first level of intermediary memory object storage acts as a lower-level cache with respect to a second level of intermediary memory object storage.

12. A cluster computer comprising a plurality of compute nodes according to any one of the previous claims, operatively connected through a computer network, and a distributed store as the main memory shared by said plurality of compute nodes.

13. An object-based prefetching method for a memory hierarchy comprising a memory subsystem localized on a compute node and a distributed store as a main memory of the compute node, the method comprising the steps of:
scheduling tasks for execution on at least one compute core of the compute node, the tasks requiring memory objects as inputs, wherein each memory object is assigned a unique object identifier (OID) and composed of a plurality of fragments accessible on the distributed store, storage locations within the distributed store being referenced by physical addresses, and wherein each memory object further comprises a metadata portion as one of at least two different partitions of the logical address space associated with the memory object, said metadata portion specifying an object type for interpreting content present in the remaining partitions;
referencing the fragments of each memory object through offsets in a contiguous logical address space associated with the memory object upon execution of scheduled tasks on the at least one compute core of the compute node;
notifying a first level of intermediary memory object storage in the memory subsystem of the memory object identifiers (OID) of memory objects that are inputs to scheduled tasks;
accessing the metadata portion and detecting the object type in the metadata portion of the memory object notified to the first level of intermediary memory object storage in the memory subsystem; and
prefetching a number of fragments of the memory object notified to the first level of intermediary memory object storage in the memory subsystem, or another memory object referred to in the metadata portion of the notified memory object, from the distributed store or a deeper level of memory object storage in the memory subsystem to the first level of intermediary memory object storage, wherein the number of fragments and the offset of each one of said number of fragments is dependent on the detected object type;
wherein said prefetching comprises mapping logical addresses of memory object fragments to be prefetched to unique physical addresses, by calculating the physical address for each memory object fragment to be prefetched from a combination of the corresponding object identifier (OID) and fragment offset within the logical address space associated with the memory object.

14. The method of claim 13, further comprising the steps of:
including an object identifier (OID) as reference to another memory object and parameters defining a view of said other memory object in the metadata portion of memory objects belonging to a data view type;
extracting the object identifier (OID) of the other memory object and the parameters defining the view of said other memory object from the metadata portion of the memory object notified to the first level of intermediary memory object storage in the memory subsystem;
executing a subroutine on the local storage controller of the first level of intermediary memory object storage that accepts the parameters defining the view of said other memory object as inputs and produces the offset of each one of said number of fragments of said other memory object as outputs.

15. The method of claim 13 or 14, further comprising the steps of:
storing combinations of object identifier (OID) and fragment offset in row entries of an allocation table of the memory subsystem of the compute node, alongside with a pointer to a location in a storage memory in the memory subsystem of the compute node, and optionally a pointer to a location in a cache memory in the memory subsystem of the compute node;
clearing each row entry in the allocation table that matches either the object identifier (OID) or both the object identifier (OID) and fragment offset embedded within a deallocation request from the at least one compute core; and
erasing the memory object fragments stored in a location of the storage memory in the memory subsystem and, if applicable, also in a location of the cache memory in the memory subsystem, referred to by the pointers stored in each row entry cleared from the allocation table in the preceding step.

## Patentansprüche

1. Ein objektbasierter Rechenknoten (500) für einen Mehrprozessor-Computer mit mehreren Knoten, umfassend:
mindestens einen Rechenkern (511) zur Ausführung von Aufgaben, die Speicherobjekte als Eingaben benötigen, wobei jedem Speicherobjekt eine eindeutige Objektkennung (OID) zugewiesen ist und es aus einer Vielzahl von Fragmenten besteht, auf die über einen verteilten Speicher zugegriffen werden kann, wobei Speicherorte innerhalb des verteilten Speichers durch physische Adressen referenziert werden, wobei der mindestens eine Rechenkern so konfiguriert ist, dass er auf die Fragmente jedes Speicherobjekts über Offsets in einem zusammenhängenden logischen Adressraum zugreift, der dem Speicherobjekt zugeordnet ist;
ein Speichersubsystem (503; 700), das mindestens eine Ebene von Zwischenspeicher für Speicherobjekte umfasst, wobei der mindestens eine Rechenkern über das Speichersubsystem operativ mit dem verteilten Speicher als Hauptspeicher für den Rechenknoten gekoppelt ist, wobei eine erste Ebene von Zwischenspeicher für Speicherobjekte des Speichersubsystems einen lokalen Speicher (740) zum Speichern von Speicherobjektfragmenten umfasst, auf die auf dem Rechenknoten und einer lokalen Speichersteuereinheit (710) zugegriffen wird;
eine Objektverwaltungseinheit (502), die zwischen dem mindestens einen Rechenkern und dem Speichersubsystem zwischengesetzt ist, wobei die Objektverwaltungseinheit so konfiguriert ist, dass sie logische Adressen von Speicherobjektfragmenten eindeutigen physischen Adressen des verteilten Speichers zuordnet, durch Berechnen der physischen Adresse für jedes Speicherobjektfragment aus einer Kombination der entsprechenden Objektkennung (OID) und des Fragment-Offsets innerhalb des dem Speicherobjekt zugeordneten logischen Adressraums;
eine Laufzeitverwaltungseinheit (516) zum Planen von Aufgaben zur Ausführung auf dem mindestens einen Rechenkern, wobei die Laufzeitverwaltungseinheit so konfiguriert ist, dass sie dem Speichersubsystem die Speicherobjektkennung (OID) von Speicherobjekten, die in eine geplante Aufgabe eingegeben werden, mitteilt, wodurch die mitgeteilten Speicherobjekte definiert werden;
wobei jedes Speicherobjekt weiter einen Metadatenabschnitt als eine von mindestens zwei unterschiedlichen Partitionen des logischen Adressraums, der dem Speicherobjekt zugeordnet ist, umfasst, wobei der Metadatenabschnitt einen Objekttyp zur Interpretation des in den übrigen Partitionen des Speicherobjekts vorhandenen Inhalts spezifiziert;
wobei die lokale Speichersteuereinheit der ersten Ebene von Zwischenspeicher für Speicherobjekte so konfiguriert ist, dass sie auf den Metadatenabschnitt zugreift und den im Metadatenabschnitt jedes mitgeteilten Speicherobjekts eingeschlossenen Objekttyp erkennt, und Vorabruf einer Anzahl von Fragmenten des mitgeteilten Speicherobjekts oder eines anderen im Metadatenabschnitt des mitgeteilten Speicherobjekts referenzierten Speicherobjekts aus einer anderen Ebene von Zwischenspeicher für Speicherobjekte des Speichersubsystems oder des verteilten Speichers befielt, wobei die Anzahl von Fragmenten und der Offset jedes einzelnen dieser Anzahl von Fragmenten vom Objekttyp abhängen.

2. Der Rechenknoten nach Anspruch 1, wobei der Metadatenabschnitt von Speicherobjekten, die zu einem Datenansichtstyp gehören, eine Objektkennung (OID) als Referenz auf ein anderes Speicherobjekt und Parameter, die eine Ansicht des anderen Speicherobjekts definieren, einschließt, wobei die Parameter bewirken, dass die lokale Speichersteuereinheit der ersten Ebene von Zwischenspeicher für Speicherobjekte eine Unterroutine ausführt, die den Offset jedes einzelnen der Anzahl von Fragmenten des anderen Speicherobjekts erzeugt.

3. Der Rechenknoten nach Anspruch 1 oder 2, wobei die Laufzeitverwaltungseinheit so konfiguriert ist, dass sie dem Speichersubsystem die Speicherobjektkennung (OID) in Verbindung mit einem Zielfragment im mitgeteilten Speicherobjekt mitteilt;
wobei die lokale Speichersteuereinheit der ersten Ebene von Zwischenspeicher für Speicherobjekte des Speichersubsystems weiter so konfiguriert ist, dass sie Vorladen des Zielfragments im mitgeteilten Speicherobjekt befielt.

4. Der Rechenknoten nach einem der vorstehenden Ansprüche, weiter umfassend:
einen Objektcache (501), der zwischen dem mindestens einen Rechenkern und der Objektverwaltungseinheit zwischengesetzt ist, um Speicherzugriffsanforderungen zu bedienen, die von dem mindestens einen Rechenkern ausgegeben werden, wobei der mindestens eine Rechenkern über den Objektcache und das Speichersubsystem operativ mit dem verteilten Speicher gekoppelt ist, wobei jede Speicherzugriffsanforderung von dem mindestens einen Rechenkern den Offset und eine virtuelle Markierung einschließt, die die Objektkennung (OID) für ein angefordertes Speicherobjektfragment darstellt;
eine Objektzuordnungstabelle zum Speichern der Objektkennungen (OID) von Speicherobjekten, auf die durch den mindestens einen Rechenkern zugegriffen werden soll, zusammen mit den entsprechenden virtuellen Markierungen; wobei der Objektcache eine Vielzahl von Cache-Zeilen umfasst, wobei jede Cache-Zeile einen Datenabschnitt zum Zurückhalten von Kopien der vom mindestens einen Rechenkern benötigten Speicherobjektfragmente und einen Markierungsabschnitt zum Zurückhalten der virtuellen Markierung, die dem Speicherobjekt zugewiesen ist, umfasst, dessen Fragmente im Datenabschnitt gespeichert sind;
wobei eine Cache-Steuereinheit des Objektcaches konfiguriert ist zum:
Vergleichen der in der Speicherzugriffsanforderung von mindestens einem Rechenkern eingeschlossenen virtuellen Markierung mit den in den Markierungsabschnitten der Cache-Zeilen gespeicherten virtuellen Markierungen,
Zugreifen auf eines der in einer Cache-Zeile zurückgehaltenen Speicherobjektfragmente unter Verwendung des in der Speicherzugriffsanforderung des mindestens einen Rechenkerns eingeschlossenen Offsets zum Bestimmen einer Offset-Position in der Cache-Zeile, vorausgesetzt, die virtuelle Markierung für diese Cache-Zeile stimmt mit der in der Speicherzugriffsanforderung des mindestens einen Rechenkerns eingeschlossenen virtuellen Markierung überein,
Ersetzen der in der Speicherzugriffsanforderung eingeschlossenen virtuellen Markierung durch die entsprechende Objektkennung (OID), die in der Objektzuordnungstabelle gespeichert ist, und Umleiten der Speicherzugriffsanforderung von dem mindestens einen Rechenkern an die Speicherobjektverwaltungseinheit, wenn keiner der in den Markierungsabschnitten der Cache-Zeilen gespeicherten virtuellen Markierungen mit der in der Speicherzugriffsanforderung vom mindestens einen Rechenkern eingeschlossenen virtuellen Markierung übereinstimmt.

5. Der Rechenknoten nach Anspruch 4, weiter umfassend eine Adressberechnungseinheit, die dem mindestens einen Rechenkern zugeordnet ist, wobei die Adressberechnungseinheit so konfiguriert ist, dass sie die Fragment-Offsets in den logischen Adressräumen der vom mindestens einen Rechenkern zu verarbeitenden Speicherobjekte berechnet und im Namen des mindestens einen Rechenkerns Speicherzugriffsanforderungen direkt an den Objektcache ausgibt.

6. Der Rechenknoten nach Anspruch 4 oder 5, wobei die Laufzeitverwaltungseinheit weiter so konfiguriert ist, dass sie Speicherobjekte identifiziert, die Eingaben für eine zur Ausführung geplante Aufgabe sind, virtuelle Markierung den als Aufgabeneingaben identifizierten Speicherobjekten zuweist und Einträge für die virtuellen Markierung in der Objektzuordnungstabelle zuweist.

7. Der Rechenknoten nach einem der vorstehenden Ansprüche, wobei die erste Ebene von Zwischenspeicher für Speicherobjekte des Speichersubsystems weiter einen lokalen Cache-Speicher zum Erfassen einer Teilmenge der Speicherobjektfragmente umfasst, auf die der Rechenknoten zugegriffen hat und die im lokalen Speicher gespeichert sind.

8. Der Rechenknoten nach Anspruch 7, wobei die erste Ebene von Zwischenspeicher für Speicherobjekte des Speichersubsystems weiter eine Zuordnungstabelle umfasst, die eine Vielzahl von Zeileneinträgen umfasst, wobei jeder Zeileneintrag so konfiguriert ist, dass er eine Kombination aus Objektkennung (OID) und Fragment-Offset sowie einen Speicherzeiger auf einen Speicherort im lokalen Speicher und einen Cache-Zeiger auf einen Speicherort im lokalen Cache-Speicher speichert;
wobei die Objektverwaltungseinheit so konfiguriert ist, dass sie Speicheranforderungen für eine Kombination aus Objektkennung (OID) und Fragment-Offset empfängt, die die für die Kombination aus Objektkennung und Fragment-Offset berechnete physische Adresse in die Speicheranforderung einschließt, und die Speicheranforderung an das Speichersubsystem weiterleitet;
wobei die lokale Speichersteuereinheit weiter konfiguriert ist zum:
Empfangen der Speicheranforderung von der Objektverwaltungseinheit;
Auswählen einer Zeile der Zuordnungstabelle basierend auf der in der Speicheranforderung eingebetteten physischen Adresse,
Überprüfen der innerhalb der Speicherzugriffsanforderung eingebetteten Objektkennung (OID) und des Fragment-Offsets anhand der in den Zeileneinträgen der ausgewählten Zuordnungstabellenzeile gespeicherten Objektkennung (OID) und des Fragment-Offsets und auswählen eines übereinstimmenden Zeileneintrags;
Überprüfen der Gültigkeit des im ausgewählten Zeileneintrag gespeicherten Cache-Zeigers;
Versenden, in Abhängigkeit von einem Ergebnis einer Überprüfung der Gültigkeit des Cache-Zeigers, von mindestens einer Hilfsspeicherzugriffsanforderung an den lokalen Cache-Speicher, den lokalen Speicher oder beide, um die Speicherzugriffsanforderung zu bedienen, wobei die mindestens eine Hilfsspeicherzugriffsanforderung die durch die im ausgewählten Zeileneintrag gespeicherten Zeiger angegebenen Speicherorte einschließt;
Erzeugen entweder einer Fehlermeldung oder eines neuen Zeileneintrags in der Zuordnungstabelle, wenn keiner der Zeileneinträge der ausgewählten Zuordnungstabellenzeile mit der Objektkennung (OID) und dem Fragment-Offset übereinstimmt, die in der Speicherzugriffsanforderung eingebettet sind;
optional Löschen jedes Zeileneintrags der Zuordnungstabelle, der entweder mit der Objektkennung (OID) oder sowohl mit der Objektkennung (OID) als auch mit dem Fragment-Offset übereinstimmt, die in einer Freigabeanforderung eingebettet sind, und Streichen der Speicherobjektfragmente, die an dem Speicherort des lokalen Speichers gehalten werden, wie sie durch die Speicherzeiger der Zeileneinträge der Zuordnungstabelle angegeben sind, die durch die Freigabeanforderung gelöscht wurden.

9. Der Rechenknoten nach Anspruch 8, wobei die erste Ebene von Zwischenspeicher für Speicherobjekte des Speichersubsystems eine erste, eine zweite und eine dritte Speichervorrichtung umfasst;
wobei die Zuordnungstabelle in der ersten Speichervorrichtung mit einer höheren Bandbreite als in der zweiten Speichervorrichtung gespeichert wird;
wobei ein Abschnitt der ersten Speichervorrichtung wahlweise als lokaler Cache-Speicher, die zweite Speichervorrichtung wahlweise als lokaler Cache-Speicher oder als Teil des lokalen Speichers und die dritte Speichervorrichtung als Teil des lokalen Speichers betrieben werden kann;
wobei die lokale Speichersteuereinheit weiter konfiguriert ist zum:
Auswählen entweder des Teils der ersten Speichervorrichtung oder der zweiten Speichervorrichtung als Speicherressource für den lokalen Cache-Speicher und Zuweisen der Cache-Zeiger in der Zuordnungstabelle zu einem Adressraum, der der als Speicherressource für den lokalen Cache-Speicher ausgewählten Speichervorrichtung zugeordnet ist;
Auswählen entweder der zweiten Speichervorrichtung oder der dritten Speichervorrichtung als Speicherressource für den lokalen Speicher und Zuweisen der Speicherzeiger in der Zuordnungstabelle zu einem Adressraum, der der als Speicherressource für den lokalen Speicher ausgewählten Speichervorrichtung zugeordnet ist, vorausgesetzt, dass die zweite Speichervorrichtung als Speicherressource für den lokalen Cache-Speicher abgewählt ist.

10. Der Rechenknoten nach einem der vorstehenden Ansprüche, wobei die lokale Speichersteuereinheit der ersten Ebene von Zwischenspeicher für Speicherobjekte des Speichersubsystems weiter so konfiguriert ist, dass sie zukünftige Zugriffe auf Speicherobjektfragmente basierend auf der früheren Zugriffshistorie auf Speicherobjektfragmente vorhersagt.

11. Der Rechenknoten nach einem der vorstehenden Ansprüche, wobei das Speichersubsystem mehrere Ebenen von Zwischenspeicher für Speicherobjekte umfasst, wobei jede Ebene von Zwischenspeicher für Speicherobjekte einen lokalen Speicher zum Speichern von Speicherobjektfragmenten, auf die auf dem Rechenknoten zugegriffen wird, und eine lokale Speichersteuereinheit umfasst, wobei die lokalen Speicher der Ebenen von Zwischenspeicher für Speicherobjekte, die näher an dem mindestens einen Rechenkern liegen, schneller sind, aber eine geringere Speicherkapazität aufweisen als die lokalen Speicher der weiter entfernten Ebenen von Zwischenspeicher für Speicherobjekte, wobei die erste Ebene von Zwischenspeicher für Speicherobjekte als Cache einer niedrigeren Ebene in Bezug auf eine zweite Ebene von Zwischenspeicher für Speicherobjekte fungiert.

12. Ein Cluster-Computer, der eine Vielzahl von Rechenknoten nach einem der vorstehenden Ansprüche umfasst, die über ein Computernetzwerk operativ verbunden sind, und einen verteilten Speicher als Hauptspeicher, der von dieser Vielzahl von Rechenknoten gemeinsam genutzt wird.

13. Ein objektbasiertes Vorabrufverfahren für eine Speicherhierarchie, die ein auf einem Rechenknoten lokalisiertes Speichersubsystem und einen verteilten Speicher als Hauptspeicher des Rechenknotens umfasst, wobei das Verfahren die folgenden Schritte umfasst:
Planen von Aufgaben zur Ausführung auf mindestens einem Rechenkern des Rechenknotens, wobei die Aufgaben Speicherobjekte als Eingaben benötigen, wobei jedem Speicherobjekt eine eindeutige Objektkennung (OID) zugewiesen ist und es aus einer Vielzahl von Fragmenten besteht, auf die in dem verteilten Speicher zugegriffen werden kann, wobei Speicherorte innerhalb des verteilten Speichers durch physische Adressen referenziert werden, und wobei jedes Speicherobjekt weiter einen Metadatenabschnitt als eine von mindestens zwei unterschiedlichen Partitionen des logischen Adressraums, der dem Speicherobjekt zugeordnet ist, umfasst, wobei der Metadatenabschnitt einen Objekttyp zur Interpretation von Inhalten spezifiziert, die in den übrigen Partitionen vorhanden sind;
Referenzieren, bei Ausführen geplanter Aufgaben auf dem mindestens einem Rechenkern des Rechenknotens, der Fragmente jedes Speicherobjekts durch Offsets in einem zusammenhängenden logischen Adressraum, der dem Speicherobjekt zugeordnet ist;
Mitteilen an eine erste Ebene von Zwischenspeicher für Speicherobjekte im Speichersubsystem der Speicherobjektkennungen (OID) von Speicherobjekten, die in die geplanten Aufgaben eingegeben werden;
Zugreifen auf den Metadatenabschnitt und Erkennen des Objekttyps im Metadatenabschnitt des Speicherobjekts, das der ersten Ebene von Zwischenspeicher für Speicherobjekte im Speichersubsystem mitgeteilt wurde; und
Vorladen einer Anzahl von Fragmenten des Speicherobjekts, das der ersten Ebene von Zwischenspeicher für Speicherobjekte im Speichersubsystem mitgeteilt wurde, oder eines anderen Speicherobjekts, auf das im Metadatenabschnitt des mitgeteilten Speicherobjekts verwiesen wird, aus dem verteilten Speicher oder einer tieferen Ebene von Speicherobjektspeicher im Speichersubsystem in die erste Ebene von Zwischenspeicher für Speicherobjekte, wobei die Anzahl von Fragmenten und der Offset jedes einzelnen der Anzahl von Fragmenten vom erkannten Objekttyp abhängen;
wobei das Vorladen Zuordnen logischer Adressen von vorzuladenden Speicherobjektfragmenten zu eindeutigen physischen Adressen umfasst, durch Berechnen der physischen Adresse für jedes vorzuladende Speicherobjektfragment aus einer Kombination der entsprechenden Objektkennung (OID) und des Fragment-Offsets innerhalb des dem Speicherobjekt zugeordneten logischen Adressraums.

14. Das Verfahren nach Anspruch 13, das weiter die folgenden Schritte umfasst:
Einschließen einer Objektkennung (OID) als Referenz auf ein anderes Speicherobjekt und Parameter, die eine Ansicht des anderen Speicherobjekts im Metadatenabschnitt von Speicherobjekten definieren, die zu einem Datenansichtstyp gehören;
Extrahieren der Objektkennung (OID) des anderen Speicherobjekts und der Parameter, die die Ansicht des genannten anderen Speicherobjekts definieren, aus dem Metadatenabschnitt des Speicherobjekts, das der ersten Ebene von Zwischenspeicher für Speicherobjekte im Speichersubsystem mitgeteilt wurde;
Ausführen einer Unterroutine auf der lokalen Speichersteuereinheit der ersten Ebene von Zwischenspeicher für Speicherobjekte, die die Parameter akzeptiert, die die Ansicht des anderen Speicherobjekts definieren, als Eingaben, und Erzeugen des Offsets jedes einzelnen der Anzahl von Fragmenten des anderen Speicherobjekts als Ausgaben.

15. Das Verfahren nach Anspruch 13 oder 14, das weiter die folgenden Schritte umfasst:
Speichern von Kombinationen aus Objektkennung (OID) und Fragment-Offset in Zeileneinträgen einer Zuordnungstabelle des Speichersubsystems des Rechenknotens, zusammen mit einem Zeiger auf einen Speicherort im Ablagespeicher des Speichersubsystems des Rechenknotens und optional mit einem Zeiger auf einen Speicherort im Cache-Speicher des Speichersubsystems des Rechenknotens;
Löschen jedes Zeileneintrags in der Zuordnungstabelle, der entweder mit der Objektkennung (OID) oder sowohl mit der Objektkennung (OID) als auch mit dem Fragment-Offset übereinstimmt, die in einer Freigabeanforderung von dem mindestens einen Rechenkern eingebettet sind; und
Streichen der Speicherobjektfragmente, die an einem Speicherort des Ablagespeichers gespeichert sind und, insofern zutreffend, auch an einem Speicherort des Cache-Speichers im Speichersubsystem, die durch die Zeiger referenziert sind, die in jedem Zeileneintrag gespeichert sind, der im vorausgehenden Schritt aus der Zuordnungstabelle gelöscht wurde.

## Revendications

1. Un nœud de calcul basé sur des objets (500) pour un ordinateur multiprocesseur à plusieurs nœuds, comprenant :
au moins un cœur de calcul (511) pour exécuter des tâches nécessitant des objets mémoire comme entrées, chaque objet mémoire étant assigné à un identifiant d'objet unique (OID) et composé d'une pluralité de fragments accessibles sur un stockage distribué, les emplacements de stockage dans le stockage distribué étant référencés par des adresses physiques, dans lequel ledit au moins un cœur de calcul est configuré pour accéder aux fragments de chaque objet mémoire par des décalages dans un espace d'adressage logique contigu associé à l'objet mémoire ;
un sous-système de mémoire (503 ; 700) comprenant au moins un niveau de stockage intermédiaire d'objets mémoire, ledit au moins un cœur de calcul étant couplé de manière opérative par ledit sous-système de mémoire au stockage distribué en tant que mémoire principale pour le nœud de calcul, dans lequel un premier niveau de stockage intermédiaire d'objets mémoire du sous-système de mémoire comprend un stockage local (740) pour stocker des fragments d'objets mémoire accédés sur le nœud de calcul et un contrôleur de stockage local (710) ;
une unité de gestion d'objets (502) interposée entre ledit au moins un cœur de calcul et le sous-système de mémoire, ladite unité de gestion d'objets étant configurée pour mapper les adresses logiques des fragments d'objets mémoire à des adresses physiques uniques du stockage distribué, en calculant l'adresse physique pour chaque fragment d'objet mémoire à partir d'une combinaison de l'identifiant d'objet correspondant (OID) et du décalage de fragment dans l'espace d'adressage logique associé à l'objet mémoire ;
une unité de gestion d'exécution (516) pour planifier les tâches à exécuter sur ledit au moins un cœur de calcul, ladite unité de gestion d'exécution étant configurée pour notifier le sous-système de mémoire de l'identifiant d'objet mémoire (OID) des objets mémoire qui sont des entrées pour une tâche planifiée, ceci définissant les objets mémoire notifiés ;
dans lequel chaque objet mémoire comprend en outre une portion de métadonnées comme l'une des au moins deux partitions différentes de l'espace d'adressage logique associé à l'objet mémoire, ladite portion de métadonnées spécifiant un type d'objet pour interpréter le contenu présent dans les partitions restantes de l'objet mémoire ;
dans lequel le contrôleur de stockage local du premier niveau de stockage intermédiaire d'objets mémoire est configuré pour accéder à la portion de métadonnées et détecter le type d'objet inclus dans la portion de métadonnées de chaque objet mémoire notifié, et commander la prélecture d'un nombre de fragments de l'objet mémoire notifié, ou d'un autre objet mémoire référencé dans la portion de métadonnées de l'objet mémoire notifié, à partir d'un autre niveau de stockage intermédiaire d'objets mémoire du sous-système de mémoire ou du stockage distribué, dans lequel le nombre de fragments et le décalage de chacun desdits fragments dépendent du type d'objet.

2. Le nœud de calcul selon la revendication 1, dans lequel la portion de métadonnées des objets mémoire appartenant à un type de vue de données inclut un identifiant d'objet (OID) comme référence à un autre objet mémoire et des paramètres définissant une vue dudit autre objet mémoire, dans lequel les paramètres amènent le contrôleur de stockage local du premier niveau de stockage intermédiaire d'objets mémoire à exécuter une sous-routine qui produit le décalage de chacun desdits fragments dudit autre objet mémoire.

3. Le nœud de calcul selon la revendication 1 ou 2, dans lequel l'unité de gestion d'exécution est configurée pour notifier le sous-système de mémoire de l'identifiant d'objet mémoire (OID) conjointement avec un fragment cible dans l'objet mémoire notifié ;
dans lequel le contrôleur de stockage local du premier niveau de stockage intermédiaire d'objets mémoire du sous-système de mémoire est en outre configuré pour commander la prélecture du fragment cible dans l'objet mémoire notifié.

4. Le nœud de calcul selon l'une quelconque des revendications précédentes, comprenant en outre :
un cache d'objets (501) interposé entre ledit au moins un cœur de calcul et l'unité de gestion d'objets, pour servir les requêtes d'accès mémoire émises par ledit au moins un cœur de calcul, ledit au moins un cœur de calcul étant couplé de manière opérative par ledit cache d'objets et ledit sous-système de mémoire au stockage distribué, chaque requête d'accès mémoire du dit au moins un cœur de calcul incluant le décalage et une étiquette virtuelle représentative de l'identifiant d'objet (OID) pour un fragment d'objet mémoire demandé ;
une table d'allocation d'objets pour stocker les identifiants d'objets (OID) des objets mémoire à accéder par ledit au moins un cœur de calcul avec les étiquettes virtuelles correspondantes ;
dans lequel le cache d'objets comprend une pluralité de lignes de cache, chaque ligne de cache comprenant une portion de données pour conserver des copies des fragments d'objets mémoire requis par ledit au moins un cœur de calcul et une portion d'étiquette pour conserver l'étiquette virtuelle assignée à l'objet mémoire dont les fragments sont conservés dans la portion de données ;
dans lequel un contrôleur de cache du cache d'objets est configuré pour :
comparer l'étiquette virtuelle incluse dans la requête d'accès mémoire du dit au moins un cœur de calcul aux étiquettes virtuelles stockées dans les portions d'étiquette des lignes de cache,
accéder à l'un des fragments d'objets mémoire conservés dans une ligne de cache, en utilisant le décalage inclus dans ladite requête d'accès mémoire du dit au moins un cœur de calcul pour déterminer un emplacement de décalage dans la ligne de cache, à condition que l'étiquette virtuelle pour cette ligne de cache corresponde à l'étiquette virtuelle incluse dans ladite requête d'accès mémoire du dit au moins un cœur de calcul,
remplacer l'étiquette virtuelle incluse dans ladite requête d'accès mémoire par l'identifiant d'objet correspondant (OID) stocké dans la table d'allocation d'objets et rediriger la requête d'accès mémoire du dit au moins un cœur de calcul vers l'unité de gestion d'objets mémoire si aucune des étiquettes virtuelles stockées dans les portions d'étiquette des lignes de cache ne correspond à l'étiquette virtuelle incluse dans ladite requête d'accès mémoire du dit au moins un cœur de calcul.

5. Le nœud de calcul selon la revendication 4, comprenant en outre une unité de calcul d'adresse associée audit au moins un cœur de calcul, ladite unité de calcul d'adresse étant configurée pour calculer les décalages de fragments dans les espaces d'adressage logique des objets mémoire à traiter par ledit au moins un cœur de calcul, et émettre des requêtes d'accès mémoire au nom du dit au moins un cœur de calcul directement vers le cache d'objets.

6. Le nœud de calcul selon la revendication 4 ou 5, dans lequel l'unité de gestion d'exécution est en outre configurée pour identifier les objets mémoire qui sont des entrées pour une tâche planifiée pour exécution, assigner des étiquettes virtuelles aux objets mémoire identifiés comme entrées de tâche, et allouer des entrées pour les étiquettes virtuelles dans la table d'allocation d'objets.

7. Le nœud de calcul selon l'une quelconque des revendications précédentes, dans lequel le premier niveau de stockage intermédiaire d'objets mémoire du sous-système de mémoire comprend en outre une mémoire cache locale pour mettre en cache un sous-ensemble des fragments d'objets mémoire accédés sur le nœud de calcul et stockés sur le stockage local.

8. Le nœud de calcul selon la revendication 7, dans lequel le premier niveau de stockage intermédiaire d'objets mémoire du sous-système de mémoire comprend en outre une table d'allocation comprenant une pluralité d'entrées de ligne, chaque entrée de ligne étant configurée pour stocker une combinaison d'identifiant d'objet (OID) et de décalage de fragment avec un pointeur de stockage vers un emplacement dans le stockage local et un pointeur de cache vers un emplacement dans la mémoire cache locale ;
dans lequel l'unité de gestion d'objets est configurée pour recevoir des requêtes mémoire pour une combinaison d'identifiant d'objet (OID) et de décalage de fragment, inclure l'adresse physique calculée pour la combinaison d'identifiant d'objet et de décalage de fragment dans la requête mémoire, et transmettre la requête mémoire au sous-système de mémoire ;
dans lequel le contrôleur de stockage local est en outre configuré pour :
recevoir la requête mémoire de l'unité de gestion d'objets ;
sélectionner une ligne de la table d'allocation basée sur l'adresse physique intégrée dans la requête mémoire,
vérifier l'identifiant d'objet (OID) et le décalage de fragment intégrés dans la requête d'accès mémoire par rapport à l'identifiant d'objet (OID) et au décalage de fragment stockés dans les entrées de ligne de la ligne de table d'allocation sélectionnée, et sélectionner une entrée de ligne correspondante ;
vérifier la validité du pointeur de cache stocké dans l'entrée de ligne sélectionnée ;
envoyer au moins une requête d'accès mémoire auxiliaire, en fonction d'un résultat de la vérification de ladite validité dudit pointeur de cache, à la mémoire cache locale, au stockage local, ou aux deux, servant ainsi la requête d'accès mémoire, dans laquelle ladite au moins une requête d'accès mémoire auxiliaire inclut les emplacements indiqués par les pointeurs stockés dans l'entrée de ligne sélectionnée ;
générer soit un message d'erreur soit une nouvelle entrée de ligne dans la table d'allocation si aucune des entrées de ligne de la ligne de table d'allocation sélectionnée ne correspond à l'identifiant d'objet (OID) et au décalage de fragment intégrés dans la requête d'accès mémoire ;
facultativement, effacer chaque entrée de ligne de la table d'allocation qui correspond soit à l'identifiant d'objet (OID) soit à la fois à l'identifiant d'objet (OID) et au décalage de fragment intégrés dans une requête de désallocation, et effacer les fragments d'objets mémoire conservés dans les emplacements du stockage local comme indiqué par les pointeurs de stockage des entrées de ligne de la table d'allocation effacées par la requête de désallocation.

9. Le nœud de calcul selon la revendication 8, dans lequel le premier niveau de stockage intermédiaire d'objets mémoire du sous-système de mémoire comprend un premier, un deuxième et un troisième dispositif de mémoire ;
dans lequel la table d'allocation est stockée sur le premier dispositif de mémoire ayant une bande passante plus élevée par rapport au deuxième dispositif de mémoire ;
dans lequel une portion du premier dispositif de mémoire est sélectivement opérable comme mémoire cache locale, le deuxième dispositif de mémoire est sélectivement opérable comme mémoire cache locale ou comme partie du stockage local, et le troisième dispositif de mémoire est opérable comme partie du stockage local ;
dans lequel le contrôleur de stockage local est en outre configuré pour :
sélectionner soit la portion du premier dispositif de mémoire soit le deuxième dispositif de mémoire comme ressource mémoire pour la mémoire cache locale, et mapper les pointeurs de cache dans la table d'allocation à un espace d'adressage associé au dispositif de mémoire sélectionné comme ressource mémoire pour la mémoire cache locale ;
sélectionner soit le deuxième dispositif de mémoire soit le troisième dispositif de mémoire comme ressource mémoire pour le stockage local, et mapper les pointeurs de stockage dans la table d'allocation à un espace d'adressage associé au dispositif de mémoire sélectionné comme ressource mémoire pour le stockage local, à condition que le deuxième dispositif de mémoire soit désélectionné comme ressource mémoire pour la mémoire cache locale.

10. Le nœud de calcul selon l'une quelconque des revendications précédentes, dans lequel le contrôleur de stockage local du premier niveau de stockage intermédiaire d'objets mémoire du sous-système de mémoire est en outre configuré pour prédire les accès futurs aux fragments d'objets mémoire en fonction de l'historique passé des accès aux fragments d'objets mémoire.

11. Le nœud de calcul selon l'une quelconque des revendications précédentes, dans lequel le sous-système de mémoire comprend plusieurs niveaux de stockage intermédiaire d'objets mémoire, chaque niveau de stockage intermédiaire d'objets mémoire comprenant un stockage local pour stocker des fragments d'objets mémoire accédés sur le nœud de calcul et un contrôleur de stockage local, les stockages locaux des niveaux de stockage intermédiaire d'objets mémoire plus proches du dit au moins un cœur de calcul étant plus rapides mais de capacité mémoire inférieure par rapport aux stockages locaux des niveaux de stockage intermédiaire d'objets mémoire plus éloignés, dans lequel le premier niveau de stockage intermédiaire d'objets mémoire agit comme un cache de niveau inférieur par rapport à un deuxième niveau de stockage intermédiaire d'objets mémoire.

12. Un ordinateur en grappe comprenant une pluralité de nœuds de calcul selon l'une quelconque des revendications précédentes, connectés de manière opérative par un réseau informatique, et un stockage distribué en tant que mémoire principale partagée par ladite pluralité de nœuds de calcul.

13. Un procédé de prélecture basé sur des objets pour une hiérarchie de mémoire comprenant un sous-système de mémoire localisé sur un nœud de calcul et un stockage distribué en tant que mémoire principale du nœud de calcul, le procédé comprenant les étapes de :
planifier des tâches pour exécution sur au moins un cœur de calcul du nœud de calcul, les tâches nécessitant des objets mémoire comme entrées, dans lequel chaque objet mémoire est assigné à un identifiant d'objet unique (OID) et composé d'une pluralité de fragments accessibles sur le stockage distribué, les emplacements de stockage dans le stockage distribué étant référencés par des adresses physiques, et dans lequel chaque objet mémoire comprend en outre une portion de métadonnées comme l'une des au moins deux partitions différentes de l'espace d'adressage logique associé à l'objet mémoire, ladite portion de métadonnées spécifiant un type d'objet pour interpréter le contenu présent dans les partitions restantes ;
référencer les fragments de chaque objet mémoire par des décalages dans un espace d'adressage logique contigu associé à l'objet mémoire lors de l'exécution des tâches planifiées sur ledit au moins un cœur de calcul du nœud de calcul ;
notifier un premier niveau de stockage intermédiaire d'objets mémoire dans le sous-système de mémoire des identifiants d'objets mémoire (OID) des objets mémoire qui sont des entrées pour les tâches planifiées ;
accéder à la portion de métadonnées et détecter le type d'objet dans la portion de métadonnées de l'objet mémoire notifié au premier niveau de stockage intermédiaire d'objets mémoire dans le sous-système de mémoire ; et
précharger un nombre de fragments de l'objet mémoire notifié au premier niveau de stockage intermédiaire d'objets mémoire dans le sous-système de mémoire, ou un autre objet mémoire référencé dans la portion de métadonnées de l'objet mémoire notifié, à partir du stockage distribué ou d'un niveau plus profond de stockage d'objets mémoire dans le sous-système de mémoire vers le premier niveau de stockage intermédiaire d'objets mémoire, dans lequel le nombre de fragments et le décalage de chacun desdits fragments dépendent du type d'objet détecté ;
dans lequel ladite prélecture comprend le mappage des adresses logiques des fragments d'objets mémoire à précharger à des adresses physiques uniques, en calculant l'adresse physique pour chaque fragment d'objet mémoire à précharger à partir d'une combinaison de l'identifiant d'objet correspondant (OID) et du décalage de fragment dans l'espace d'adressage logique associé à l'objet mémoire.

14. Le procédé selon la revendication 13, comprenant en outre les étapes de :
inclure un identifiant d'objet (OID) comme référence à un autre objet mémoire et des paramètres définissant une vue dudit autre objet mémoire dans la portion de métadonnées des objets mémoire appartenant à un type de vue de données ;
extraire l'identifiant d'objet (OID) de l'autre objet mémoire et les paramètres définissant la vue dudit autre objet mémoire de la portion de métadonnées de l'objet mémoire notifié au premier niveau de stockage intermédiaire d'objets mémoire dans le sous-système de mémoire ;
exécuter une sous-routine sur le contrôleur de stockage local du premier niveau de stockage intermédiaire d'objets mémoire qui accepte les paramètres définissant la vue dudit autre objet mémoire comme entrées et produit le décalage de chacun desdits fragments dudit autre objet mémoire comme sorties.

15. Le procédé selon la revendication 13 ou 14, comprenant en outre les étapes de :
stocker des combinaisons d'identifiant d'objet (OID) et de décalage de fragment dans les entrées de ligne d'une table d'allocation du sous-système de mémoire du nœud de calcul, avec un pointeur vers un emplacement dans une mémoire de stockage dans le sous-système de mémoire du nœud de calcul, et éventuellement un pointeur vers un emplacement dans une mémoire cache dans le sous-système de mémoire du nœud de calcul ;
effacer chaque entrée de ligne dans la table d'allocation qui correspond soit à l'identifiant d'objet (OID) soit à la fois à l'identifiant d'objet (OID) et au décalage de fragment intégrés dans une requête de désallocation du dit au moins un cœur de calcul ; et
effacer les fragments d'objets mémoire stockés dans un emplacement de la mémoire de stockage dans le sous-système de mémoire et, le cas échéant, également dans un emplacement de la mémoire cache dans le sous-système de mémoire, référencés par les pointeurs stockés dans chaque entrée de ligne effacée de la table d'allocation à l'étape précédente.
